(19)

Europäisches
Patentamt
European
Patent Office
Office européen
des brevets

(11) **EP 4 641 480 A1**

(12) **EUROPEAN PATENT APPLICATION**
published in accordance with Art. 153(4) EPC

(43) Date of publication:
**29.10.2025 Bulletin 2025/44**

(21) Application number: **23906482.7**

(22) Date of filing: **01.11.2023**

(51) International Patent Classification (IPC):
***G06Q 50/40*** *(2024.01)*    ***G01C 21/34*** *(2006.01)*
***G08G 1/14*** *(2006.01)*

(52) Cooperative Patent Classification (CPC):
**G01C 21/34; G06Q 50/40; G08G 1/14**

(86) International application number:
**PCT/JP2023/039424**

(87) International publication number:
**WO 2024/135110 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **23.12.2022   JP 2022207053**

(71) Applicant: **Hitachi, Ltd.
Tokyo 100-8280 (JP)**

(72) Inventors:
• **KUMAGAI, Masatoshi
Tokyo 100-8280 (JP)**
• **NAKANO, Michiki
Tokyo 100-8280 (JP)**
• **FUJIWARA, Shuuhei
Tokyo 100-8280 (JP)**

(74) Representative: **Mewburn Ellis LLP
Aurora Building
Counterslip
Bristol BS1 6BX (GB)**

(54) **PARKING/CHARGING MANAGEMENT SYSTEM, VEHICLE INTEGRATED MANAGEMENT SYSTEM, AND PARKING/CHARGING MANAGEMENT METHOD**

(57)    A parking/charging management system (5) includes: a parking/charging plan calculation unit (71) that calculates a parking/charging plan, using an operation plan including a departure time at which an electric vehicle departs from a parking spot and an arrival time at which the electric vehicle arrives at the parking spot, a restriction on the electric vehicle, and a restriction on the charger, as restriction conditions. The parking/charging management system (5) further includes an operation plan setting up determination unit 72 that when calculating the parking/charging plan is possible, determines the operation plan to be executable, and that when the operation plan is executable, outputs the parking/charging plan. The parking/charging plan calculation unit (71) calculates the parking/charging plan, using a restriction on a layout of a parking lot in which the electric vehicle is parked at the parking spot, as a restriction condition.

[FIG. 2]

FIG. 2 CONFIGURATION OF VEHICLE INTEGRATED MANAGEMENT SYSTEM ACCORDING TO FIRST EMBODIMENT

**Description**

Technical Field

The present invention relates to a parking/charging management system, a vehicle integrated management system, and a parking/charging management method.

Background Art

There are fleet operators that operate business vehicles, such as buses and trucks. Using a fleet management system (FMS), the fleet operator creates a vehicle operation plan including assignment of vehicles to operation routes and departure and arrival times at various points on routes, based on an operation schedule including operation routes, operation times, and necessary transportation capacities.

In recent years, as electric vehicles(EVs) become widespread, EVs have been adopted as business vehicles. An EV has restrictions unique to the EV, the restrictions being related to a storage battery and a charger and determined based on a charging plan. For example, PTL 1 discloses a technique by which an operation plan is created in order to meet restrictions unique to the EV.

Citation List

Patent Literature

PTL 1: JP 2015-60570 A

Summary of Invention

Technical Problem

In many cases, because of the issue of costs required for revising or updating the FMS, an actual operation plan is created using an existing FMS for internal combustion engine vehicles even when the operation plan is created for EV-used operations. Because the existing FMS is for internal combustion engine vehicles, the existing FMS cannot handle restrictions unique to the EV when the operation plan is created.

However, the above-described conventional technique does not provide a means that calculates an EV parking/charging plan meeting restrictions unique to the EV so that an EV operation plan created by using the existing FMS incapable of handling the restrictions unique to the EV is set up.

The present invention has been conceived in view of the above background, and an object of the present invention is to calculate an EV parking/charging plan meeting restrictions unique to the EV so that an EV operation plan created by using an existing FMS incapable of handling the restrictions unique to the EV is set up.

Solution to Problem

According to one aspect of the present invention, a parking/charging management system calculates a parking/charging plan including a charging schedule of an electric vehicle at a parking spot furnished with a charger. The parking/charging management system includes: a parking/charging plan calculation unit that calculates the parking/charging plan, using an operation plan including a departure time at which the electric vehicle departs from the parking spot and an arrival time at which the electric vehicle arrives at the parking spot, a restriction on the electric vehicle, and a restriction on the charger, as restriction conditions; and an operation plan setting up determination unit that when the parking/charging plan calculation unit can calculate the parking/charging plan, determines the operation plan to be executable, and that when the operation plan is executable, outputs the parking/charging plan. The parking/charging plan calculation unit calculates the parking/charging plan, using a restriction on a layout of a parking lot in which the electric vehicle is parked in the parking spot, as a restriction conditions.

Advantageous Effects of Invention

According to one aspect of the present invention, an EV parking/charging plan meeting restrictions unique to the EV can be calculated so that an EV operation plan created by using an existing FMS incapable of handling the restrictions unique to the EV is set up.

Brief Description of Drawings

[FIG. 1] FIG. 1 is an explanatory diagram of an outline of an embodiment.

[FIG. 2] FIG. 2 depicts an example of a configuration of a vehicle integrated management system according to a first embodiment.

[FIG. 3] FIG. 3 depicts an example of a hardware configuration of the vehicle integrated management system according to the first embodiment.

[FIG. 4] FIG. 4 is a flowchart showing an example of a parking/charging plan creation process according to the first embodiment.

[FIG. 5] FIG. 5 depicts an example of a data configuration of an initial operation plan.

[FIG. 6] FIG. 6 is an explanatory diagram concerning setting of a basic restriction condition and a basic objective function.

[FIG. 7] FIG. 7 depicts an example of a data configuration of a parking/charging plan.

[FIG. 8] FIG. 8 depicts an example of a data configuration of a corrected operation plan.

[FIG. 9] FIG. 9 is a flowchart showing details of a relaxation restriction conditions/relaxation objective function setting process.

[FIG. 10] FIG. 10 is an explanatory diagram of a parking lot with a first-in-last-out restriction.

[FIG. 11] FIG. 11 is an explanatory diagram of conversion of a departure time correction binary variable and an arrival time correction binary variable.

[FIG. 12] FIG. 12 is an explanatory diagram of conversion of a departure time correction binary variable and an arrival time correction binary variable in a case where a non-relaxation restriction condition (part) is set.

[FIG. 13] FIG. 13 is a flowchart showing details of a parking management restriction condition setting process (for each vehicle).

[FIG. 14] FIG. 14 is an explanatory diagram of a parking management restriction condition (waiting for parking lot switching).

[FIG. 15] FIG. 15 is an explanatory diagram of a parking management restriction condition (waiting for parking lot switching) in a case where only parking lot switching is carried out as correction of an operation plan is inhibited.

[FIG. 16] FIG. 16 is a flowchart showing details of a parking management restriction condition setting process (all vehicles).

[FIG. 17] FIG. 17 is an explanatory diagram of parking lot switching.

[FIG.18] FIG. 18 depicts an example of a configuration of a vehicle integrated management system according to a second embodiment.

[FIG. 19] FIG. 19 is a flowchart showing an example of an executability margin evaluation process according to the second embodiment.

[FIG. 20] FIG. 20 depicts an example of display of executability margins.

Description of Embodiments

Hereinafter, embodiments according to the present disclosure will be described with reference to drawings. The embodiments are examples including drawings for describing the present invention. In the embodiments, omission and simplification are made when necessary, to make the description clear. Unless otherwise specified, each constituent element making up the embodiments may take either a single form or a plural form without being limited to one of them. In addition, a combination of one embodiment and another embodiment is also included in the embodiments according to the present invention.

Constituent elements identical or similar to each other are denoted by the identical reference signs, and in an embodiment or example to follow, description of such constituent elements may be omitted or only the description focusing on a difference between the constituent elements may be made. When a plurality of constituent elements identical or similar to each other are present, such constituent elements may be denoted by the identical reference signs with different subscripts appended thereto, for clear description. When distinguishing these constituent elements from each other is unnecessary, however, the constituent elements may be described with their subscripts removed. Unless otherwise specified, each constituent element may be provided as either a single one or multiple ones.

In the embodiments, a process executed by running a program may be described. A computer causes a processor (e.g., a central processing unit (CPU) or a graphics processing unit (GPU)) to execute a process defined by a program, using a memory or the like of a main storage device. A main component that executes the process by running the program, therefore, may be considered to be the processor. The processor's executing the program implements a functional unit that carries out the process.

Similarly, the main component that executes the process by running the program may be considered to be a controller, a device, a system, a computer, or a node having the processor. The main component that executes the process by running the program is provided as an arithmetic processing unit, which may include a dedicated circuit that carries out a specific process. The dedicated circuit is, for example, a field programmable gate array (FPGA), an application specific integrated circuit (ASIC), and the like.

The program may be acquired from a program source and installed in the computer. The program source may be, for example, a program distribution server or a computer-readable, non-transitory recording medium. When the program source is a program distribution server, the program distribution server includes a processor and a storage resource (storage) that stores a program to be distributed, and the processor of the program distribution server may distribute the program to be distributed, to a different computer. In the embodiments, two or more programs may be implemented as one program or one program may be implemented as two or more programs.

A vehicle described in the following embodiments is an electrically powered vehicle, such as an electric vehicle (EV) and a plug-in hybrid vehicle (PHV), that travels by consuming electric energy stored in a charged storage battery, as a power source. For example, electric vehicles that transport passengers or cargos, such as EV buses or an EV trucks, are example of such electrically powered vehicles.

[First Embodiment]

An outline of a first embodiment will first be described.

In the first embodiment, for an operation plan including electric vehicles (EV) as a planning target, the operation plan being created by an existing fleet management system (FMS), a parking/charging plan including a parking schedule and a charging schedule is calculated. The parking/charging plan is calculated in such a way as to minimize an objective function of CO2 emissions, cost, etc. as a restriction on a vehicle, a restriction on a charger, and a restriction on the layout of a parking lot in a parking spot furnished with chargers (including parking order restriction in parallel parking) are taken into consideration.

The restriction on the vehicle includes, for example, the SoC of the vehicle and power consumption by the vehicle's traveling. The restriction on the charger includes a power-receiving capacity of the parking spot where the vehicle is charged, and power output of the charger.

When the operation plan by the existing FMS is "not executable to an EV", a departure time and an arrival time at the parking spot included in the operation plan are corrected and then the parking/charging plan is calculated. "Not executable to an EV" refers to, for example, a case where a charging amount is insufficient because of a restriction on a charging time or a power-receiving capacity or a case where allocation to a parking lot furnished with a charger does not work out.

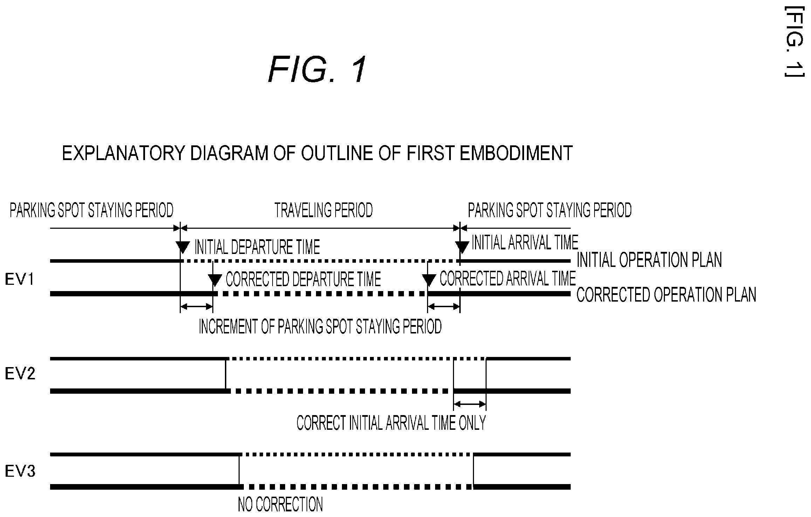

FIG. 1 is an explanatory diagram of an outline of a first embodiment. In the first embodiment, an optimizing calculation of a parking/charging plan is made first, using an initial departure time and an initial arrival time in an initial operation plan, as a restriction condition. When the parking/charging plan can be calculated, the initial operation plan is determined to be executable.

When the initial operation plan is not executable, the departure time and the arrival time are turned into variables, as a relaxation operation, and (corrected departure time - initial departure time) and (initial arrival time - corrected arrival time) are added to the objective function in execution of the optimization calculation of the parking/charging plan.

Then, the optimization calculation of the parking/charging plan is made again in such a way as to minimize (optimize) the objective function. As a result, a corrected version of the operation plan that minimizes an increment in a parking spot staying period, the increment resulting from correction of the operation plan, and a parking/charging plan corresponding to the corrected version are outputted.

For example, in the case of an "EV1" shown in FIG. 1, both the initial departure time and the initial arrival time are corrected and consequently the parking spot staying period increases. In the case of an "EV2", only the initial arrival time is corrected, which results in an increase in the parking spot staying period. An increase in the parking spot staying period leads to a sufficient charging amount, in which case allocation of vehicles to parking lots furnished with a charger work out.

It should be noted that because correction of the initial departure time or the initial arrival time of the "EV1" and the "EV2" makes the initial operation plan executable, an "EV3" is not subject to correction of the initial departure time or the initial arrival time, that is, its initial departure time and initial arrival time are not corrected.

(Configuration of Vehicle Integrated Management System 1S According to First Embodiment)

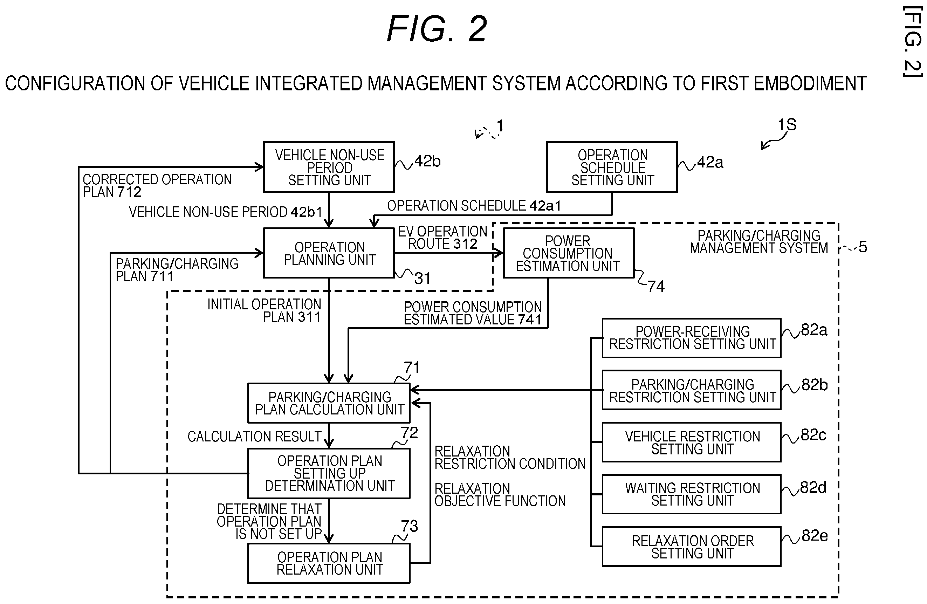

FIG. 2 depicts an example of a configuration of a vehicle integrated management system 1S according to the first embodiment. The vehicle integrated management system 1S is applied to a fleet operator (a bus operator, a truck operator, etc.) that provides a service of operating a plurality of vehicles including EVs.

The vehicle integrated management system 1S includes a fleet management system 1 and a parking/charging management system 5.

The fleet management system 1 is an existing system including an operation planning unit 31, an operation schedule setting unit 42a, and a vehicle non-use period setting unit 42b.

The operation planning unit 31 creates an operation plan for a target vehicle, based on information on an operation schedule 42a1 of the target vehicle that is set by the operation schedule setting unit 42a and a vehicle non-use period 42b1 of the target vehicle that is set by the vehicle non-use period setting unit 42b. The information on the vehicle non-use period 42b1 is, for example, information on a period during which the vehicle cannot be used because of inspection, etc.

The operation schedule includes information on the operation route and operation time of the target vehicle operated by the fleet operator and the required transportation capacity of the fleet operator. The operation plan includes information on allocation of vehicles to operation routes in the operation schedule, operation routes, and a departure time/arrival time at each point on each operation route.

The operation planning unit 31 outputs an initial operation plan 311 created, to a parking/charging plan calculation unit 71 of the parking/charging management system 5. The operation planning unit 31 outputs information on an EV operation route 312 included in the initial operation plan 311 created, to a power consumption estimation unit 74.

The parking/charging management system 5 is a system that gives and adds a parking/charging planning function as an EV management function, to the existing fleet management system 1.

The parking/charging management system 5 includes the parking/charging plan calculation unit 71, an operation plan setting up determination unit 72, an operation plan relaxation unit 73, a power-receiving restriction setting unit 82a, a parking/charging restriction setting unit 82b, a vehicle restriction setting unit 82c, a waiting restriction setting unit 82d, and a relaxation order setting unit 82e.

The power-receiving restriction setting unit 82a, the parking/charging restriction setting unit 82b, the vehicle restriction setting unit 82c, and the waiting restriction setting unit 82d are functional units through which various restrictions are inputted when the parking/charging plan calculation unit 71 calculates a parking/charging plan.

The power-receiving restriction setting unit 82a sets power-receiving restrictions, such as a power-receiving upper limit (kW) of a power-receiving facility, an electricity charge (basic charge (kW)/pay-for-use charge (kWh)), and a $CO_2$ emission coefficient (kg-$CO_2$/kWh), in the parking/charging plan calculation unit 71. The parking/charging restriction setting unit 82b sets parking/charging restrictions, such as the layout of a parking lot and power output (kW) of a charger installed in the parking lot, in the parking/charging plan calculation unit 71.

The vehicle restriction setting unit 82c sets vehicle restrictions, such as a storage battery capacity (kWh) of each vehicle, in the parking/charging plan calculation unit 71. The waiting restriction setting unit 82d sets waiting restrictions, such as a waiting allowed period in which the driver is allowed to wait before and after a traveling period of the vehicle and the possibility or impossibility of switching of vehicle parking lots, in the parking/charging plan calculation unit 71.

The relaxation order setting unit 82e sets the order (relaxation order) of a vehicle for which the initial operation plan 311 is relaxed, in the parking/charging plan calculation unit 71. The relaxation order is applied to one vehicle or a group of vehicles. The parking/charging plan calculation unit 71 sequentially expands a range of vehicles for which relaxation restriction conditions and relaxation objective functions are additionally set, according to the relaxation order until calculation of the parking/charging plan becomes possible, and then executes calculation of the parking/charging plan, with the relaxation restriction conditions and relaxation objective functions added thereto.

The parking/charging plan calculation unit 71 calculates the parking/charging plan, using initial departure times and initial arrival times set in the initial operation plan 311, a power consumption estimated value 741 of power consumption resulting from traveling, and other restrictions, as restriction conditions, and using key performance indicators (KPI), such as $CO_2$ reduction values, cost reduction values, and a weighted sum of them, as objective functions. The other restrictions include the SoC of a vehicle, the power-receiving capacity and charger power output of a parking spot, and the layout of a parking lot furnished with a charger (e.g., parking order restriction in parallel parking).

The operation plan setting up determination unit 72 determines whether the initial operation plan 311 created by the operation planning unit 31 is executable, based on the possibility or impossibility of calculation of the parking/charging plan by the parking/charging plan calculation unit 71. When the parking/charging plan calculation unit 71 can calculate the parking/charging plan (when an optimization calculation gives an executable solution), the operation plan setting up determination unit 72 determines that the initial operation plan 311 created by the operation planning unit 31 is executable, and outputs the parking/charging plan 711 to the operation planning unit 31. When the parking/charging plan can be calculated for restrictions on the operation plan relaxed by the operation plan relaxation unit 73, the parking/charging plan 711 is outputted to the operation planning unit 31 as a corrected operation plan 712 is outputted to the vehicle non-use period setting unit 42b.

Based on the corrected operation plan 712 set in the vehicle non-use period setting unit 42b, the operation planning unit 31 creates an operation plan reflecting correction of initial departure times and initial arrival times. By taking in output results from the parking/charging management system 5 via the vehicle non-use period setting unit 42b, the fleet management system 1 can change its fleet management status to a fleet management status reflecting the parking/charging plan.

When the parking/charging plan calculation unit 71 cannot calculate the parking/charging plan 711, the operation plan relaxation unit 73 sets a relaxation restriction condition and a relaxation objective function in the parking/charging plan calculation unit 71.

(Hardware Configuration of Vehicle Integrated Management System 1S According to First Embodiment)

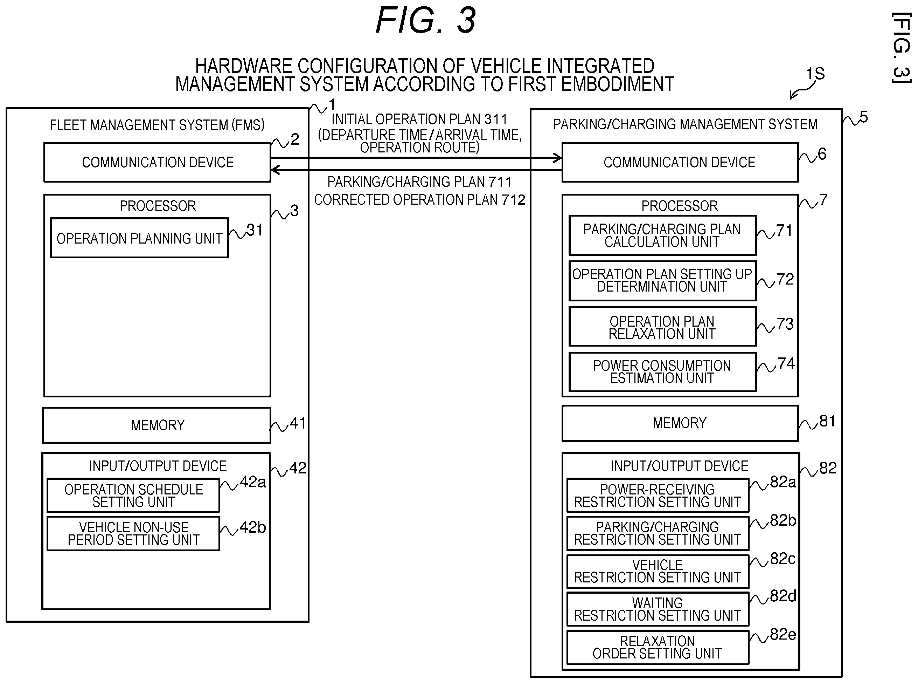

FIG. 3 depicts an example of a hardware configuration of a vehicle integrated management system 1S according to the first embodiment. In the vehicle integrated management system 1S, for example, the fleet management system 1 and the parking/charging management system 5 separately operate on different computers.

The fleet management system 1 includes a communication device 2, a processor 3, a memory 41, and an input/output device 42. The input/output device 42 includes an input device, such as a keyboard and a mouse, and an output device, such as a display. The fleet management system 1 further includes a storage device storing programs and various data.

The processor 3 executes a given program in cooperation with the memory 41, thereby implementing the operation planning unit 31. In addition, the processor 3 executes a given program in cooperation with the memory 41, thereby implementing the operation schedule setting unit 42a and the vehicle non-use period setting unit 42b, as input functions on the input/output device 42.

The parking/charging management system 5 includes a communication device 6, a processor 7, a memory 81, and an input/output device 82. The input/output device 82 includes an input device, such as a keyboard and a mouse, and an output device, such as a display. The parking/charging management system 5 further includes a storage device storing programs and various data.

The processor 7 executes a given program in cooperation with the memory 81, thereby implementing the parking/charging plan calculation unit 71, the operation plan setting up determination unit 72, the operation plan relaxation unit 73, and the power consumption estimation unit 74. The power consumption estimation unit 74 is an existing function, and may be a function outside the parking/charging management system 5. In addition, the processor 7 executes a given program in cooperation with the memory 81, thereby implementing the power-receiving restriction setting unit 82a, the parking/charging restriction setting unit 82b, the vehicle restriction setting unit 82c, the waiting restriction setting unit 82d, and the relaxation order setting unit 82e, as input functions on the input/output device 82.

The fleet management system 1 and the parking/charging management system 5 transmit/receive information to/from each other through network communication performed by the communication devices 2 and 6. The parking/charging management system 5 is an add-on system that transmits a corrected operation plan and a parking/charging plan, which are created for an initial operation plan from the fleet management system 1 of each fleet operator, to the fleet management system 1. Alternatively, the parking/charging management system 5 may be a cloud system that transmits a corrected operation plan and a parking/charging plan to the fleet management system 1. The parking/charging management system 5 may be included in the fleet management system 1.

(Parking/Charging Plan Creation Process According to First Embodiment)

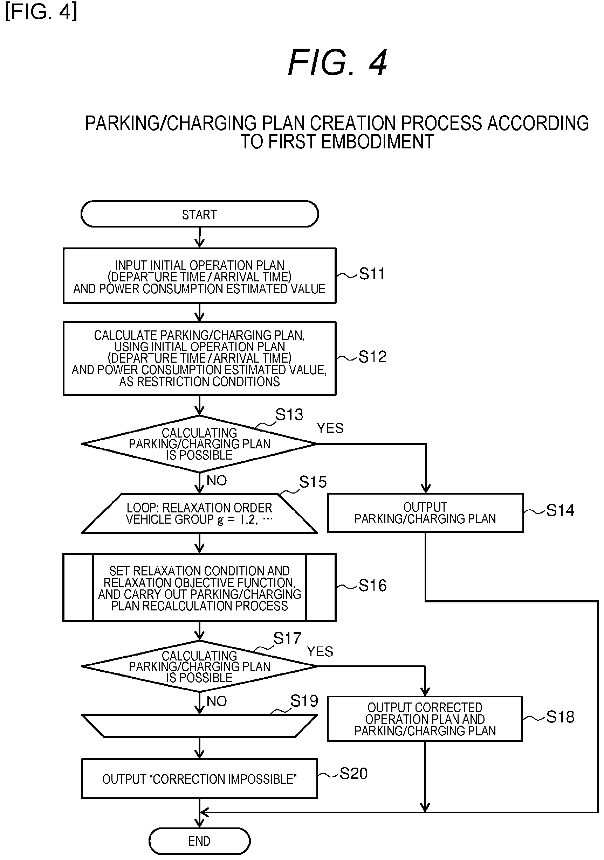

FIG. 4 is a flowchart showing an example of a parking/charging plan creation process according to the first embodiment. The parking/charging plan creation process according to the first embodiment is executed every time an operator gives an instruction or the operation planning unit 31 creates an initial operation plan.

(Step S11)

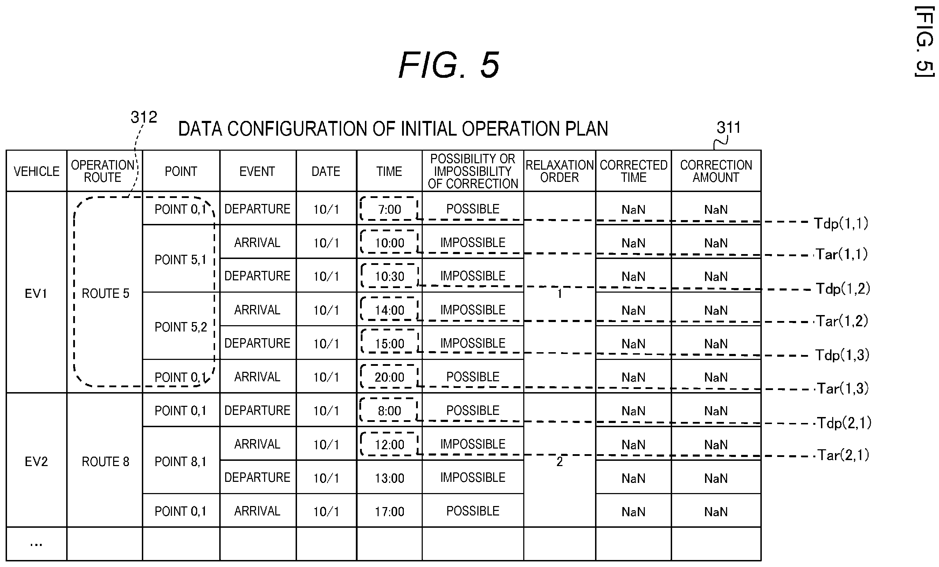

The parking/charging plan calculation unit 71 receives input of the initial operation plan 311 (FIG. 5) from the operation planning unit 31 and input of the power consumption estimated value 741 from the power consumption estimation unit 74. The power consumption estimated value 741 is calculated by the power consumption estimation unit 74, based on information on an EV operation route 312 (FIG. 5) included in the initial operation plan 311. When finishing step S11, the parking/charging plan calculation unit 71 lets the process flow proceed to step S12.

FIG. 5 depicts an example of a data configuration of the initial operation plan 311. The initial operation plan 311 includes items of "vehicle", "operation route", "point", "event", "date", " time", "possibility/impossibility of correction", "relaxation order", "corrected time", and "correction amount". Among these items, "possibility/impossibility of correction" and "relaxation order" are items added by the relaxation order setting unit 82e.

For each "vehicle", the initial operation plan 311 stores "date" and "time" of departure or arrival at each "point" on a route identified by "operation route", and "possibility/impossibility of correction" at each "time". The initial operation plan 311 stores also "relaxation order" representing the order of each "vehicle" in priority of relaxation of a restriction condition and an objective function at calculation of the parking/charging plan. In the initial operation plan 311, "NaN" (no data entry) is entered in "corrected time" and "correction amount" columns.

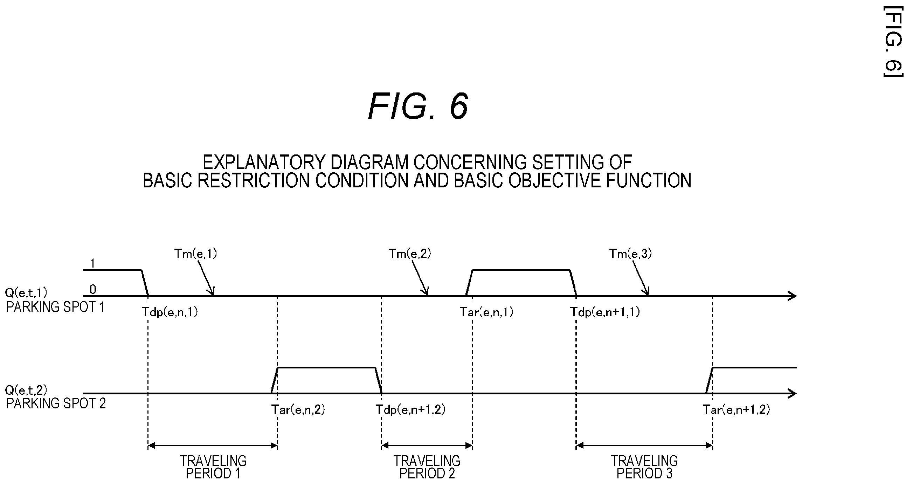

In FIG. 5, for example, "point 0, 1" represents the first garage each "operation route" has in common (0). "point 5, 1" represents the first point of a route 5. As shown in FIG. 6, a departure time of "EV1" at "point 0, 1" is defined as a variable Tdp(1, 1), an arrival time at "point 5, 1" as a variable Tar (1, 1), ... a departure time at "point 5, 2" as a variable Tdp(1, 3), and an arrival time at "point 0, 1" as a variable Tar(1, 3). Likewise, a departure time of "EV2" at "point 0, 1" is defined as a variable Tdp(2,1), ... an arrival time at "point 8, 1" as a variable Tar(2,1), and so on. Variables Tdp(e, i) and Tar(e, i) (i=1, 2, ...) will be described later.

"Possibility/impossibility of correction" may be set for each group of "vehicles".

(Step S12)

The parking/charging plan calculation unit 71 calculates a parking/charging plan with times of "departure" and "arrival", which are "events", in the initial operation plan 311 and the power consumption estimated value 741 serving as restriction conditions. Basic restriction conditions and an objective function of a charging plan for the initial operation plan 311 can be described and calculated, for example, in the same manner as by a method described in Document 1 "Allocation/Charging Plan to Expand Motorized Coverage in Route Delivery in EV/Diesel Vehicle Mixed Operation"(Masatoshi Kumagai et al., The Institute of Electrical Engineers of Japan, Electric Power and Energy Division Convention, 2022). A parking management restriction condition unique to this embodiment will be described later. When finishing step S12, the parking/charging plan calculation unit 71 lets the process flow proceed to step S13.

The restriction conditions (basic restriction conditions) and the objective function (basic objective function) of the parking/charging plan calculated at step S12 will be described with reference to FIG. 6. FIG. 6 is an explanatory diagram concerning setting of a basic restriction condition and a basic objective function.

A representative time of a traveling period m (m=1, 2, and 3) of a vehicle e is denoted as $Tm(e, m)$, which is defined by equation (1). In equation (1), a figure in the first decimal place is round up to the nearest whole number.

$$Tm(e, m) = (Tdp(e, m) + Tar(e, m))/2 \ldots (1)$$

In this equation, an initial departure time $Tdp(e, m)$ and an initial arrival time $Tar(e, m)$ are described by using the traveling period m, which is a serial number not associated with a parking spot a. An initial departure time $Tdp(e, n, a)$ and an initial arrival time $Tar(e, n, a)$, on the other hand, represent a departure time and an arrival time at each parking spot a that are distinguished from departure times and arrival times at other parking spots by a difference in the value of a.

By setting a restriction condition $q(e, Tm(e, m), a) = 0$ on a variable (which will be described later) indicating the possibility or impossibility of the vehicle e staying in the parking spot a, the vehicle e is made absent from the parking spot a at $Tm(e, m)$. As a result, a period in which the departure time or the arrival time can be corrected, that is, a period in which the vehicle can be charged is limited to a period not overlapping $Tm(e, m)$ shown in FIG. 6.

The power consumption estimated value 741 in the traveling period m of the vehicle e is set to $B(e, Tm(e, m))$. At times other than the traveling period m, $B(e, t) = 0$ is set.

The basic restriction conditions of the parking/charging plan calculated at step S12 include a basic restriction condition (change in an electricity storage amount) and a basic restriction condition (power-receiving capacity).

The basic restriction condition (change in an electricity storage amount) includes a restriction condition (equation (2)) expressing a change in an electricity storage amount $b(e, t)$ of the vehicle e, and a restriction condition (equation (3)) expressing upper and lower limits of the electricity storage amount $b(e, t)$. In equations below, $\Sigma\_k *$ represents the sum of * for all indexes k.

$$b(e, t) = b(e, t-1) + \Sigma\_a\ y(e, t, a) - B(e, t) \ldots (2)$$

$$Bmin(e) \leq b(e, t) \leq Bmax(e) \ldots (3)$$

Thus, equation (2) is a restriction condition that a value given by adding a charging amount $\Sigma\_a\ y(e, t, a)$ in a time frame t and subtracting a power consumption estimated value $B(e, t)$ to and from an electricity storage amount $b(e, t-1)$ in a time frame t-1 is equal to an electricity storage amount $B(e, t)$ in the time frame t. Equation (3) is a restriction condition that limits a change in the electricity storage amount $b(e, t)$ resulting from charging and traveling to a range between a lower limit value $Bmin(e)$ and an upper limit value $Bmax(e)$ of the electricity storage amount of the vehicle e.

The basic restriction condition (power-receiving capacity) is expressed by equation (4).

$$\Sigma\_e\ y(e, t, a) + Wbase(t, a) \leq Wmax(a) \ldots (4)$$

Equation (4) is a restriction condition that at each parking spot a, a total of respective charging amounts y(e, t, a) and base loads Wbase(t, a) of EVs is kept equal to or less than an upper limit Wmax(a) based on a power-receiving capacity and contract-based power usage.

The basic objective function of the parking/charging plan calculated at step S12 includes a basic objective function (term for minimizing CO2 emission) and a basic objective function (term for minimizing charging cost).

The basic objective function (term for minimizing CO2 emission) is expressed by equation (5). Kc(t, a) in equation (5) denotes a CO2 emission coefficient (kg-CO2/kWh) of electric power supplied at the parking spot a in the time frame t.

$$\Sigma\_a \ \Sigma\_t \ \Sigma\_e \ Kc(t, a) \ \times \ y(e, t, a) \ ... \ (5)$$

The basic objective function (term for minimizing charging cost) is expressed by equation (6). Kp(t, a) in equation (6) denotes a unit price (yen/kWh) of electric power supplied at the parking spot a in the time frame t.

$$\Sigma\_a \ \Sigma\_t \ \Sigma\_e \ Kp(t, a) \ \times \ y(e, t, a) \ ... \ (6)$$

(Step S13)

The operation plan setting up determination unit 72 determines whether the operation plan is executable, based on the possibility or impossibility of calculation of the parking/charging plan at step S12. "Calculating the parking/charging plan being possible" means that the parking/charging plan meeting restrictions of the initial operation plan allows solutions to be fund by a mathematical programming or the like. When calculating the parking/charging plan is possible (step S13: YES), the operation plan setting up determination unit 72 determines the operation plan to be executable, and lets the process flow proceed to step S14. When calculating the parking/charging plan is impossible (step S13: NO), the operation plan setting up determination unit 72 determines the operation plan in its current state to be not executable, and lets the process flow proceed to step S15.

(Step S14)

The operation plan setting up determination unit 72 outputs the parking/charging plan 711 calculation of which is found possible at step S13, to the operation planning unit 31, and ends the parking/charging plan creation process.

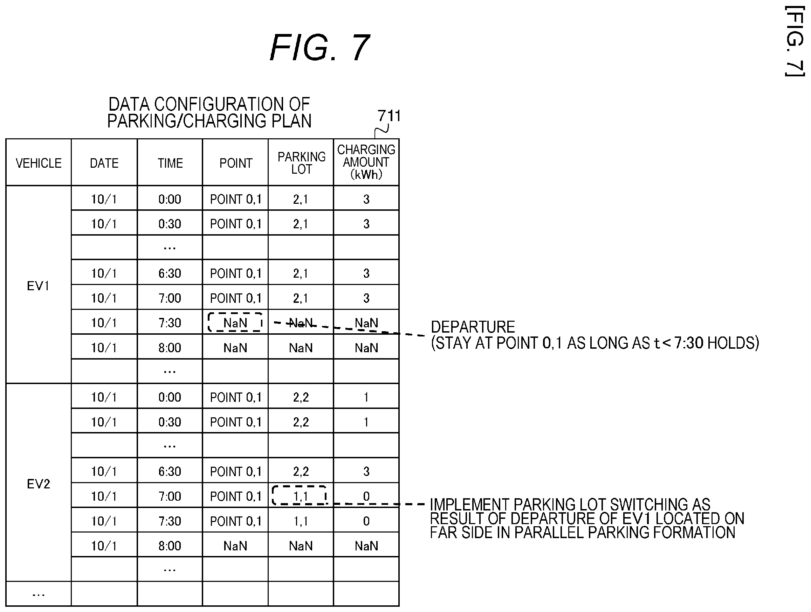

FIG. 7 depicts an example of a data configuration of a the parking/charging plan 711. The parking/charging plan 711 includes items of "vehicle", "date", "time", "point", "parking lot", and "charging amount". The parking/charging plan 721 stores plan information answering a question: when ("date" and "time"), where ("point" and "parking lot"), and how much ("charge amount") will each "vehicle" be charged. The example of FIG. 7 indicates that "EV1" stays in a parking spot at "point 0.1", is charged there as long as time frame t<7:30 holds, and then departs from "point 0,1" at time frame t=7:30. The example indicates also that at time frame t=7:00, parking lot switching is implemented to let "EV2" move into a parking lot 1, 1 that becomes available as a result of "EV1" leaving a parking lot 2, 1 located farther side to a parking lot 2, 2 in a parallel parking formation.

(Step S15)

The operation plan relaxation unit 73 sequentially executes a loop of steps S15 to S19 on vehicle groups g=1, 2, ... according to the "relaxation order" of the initial operation plan 311 while adding a vehicle group to the loop. For example, a vehicle group g=1 is selected at the first execution of the loop, vehicle groups g=1, 2 are selected at the second execution, and vehicle groups g=1, 2, 3 are selected at the third execution. The vehicle group g may consist of one vehicle. At step S15, the operation plan relaxation unit 73 additionally selects a vehicle group g not selected yet and then lets the process flow proceed to step S16.

(Step S16)

The operation plan relaxation unit 73 additionally sets a relaxation restriction condition and a relaxation objective function in the parking/charging plan calculation unit 71. Then, the parking/charging plan calculation unit 71 executes a relaxation restriction condition/relaxation objective function setting and parking/charging plan recalculation process by which a parking/charging plan is calculated again, using the relaxation restriction condition and relaxation objective function having been set additionally.

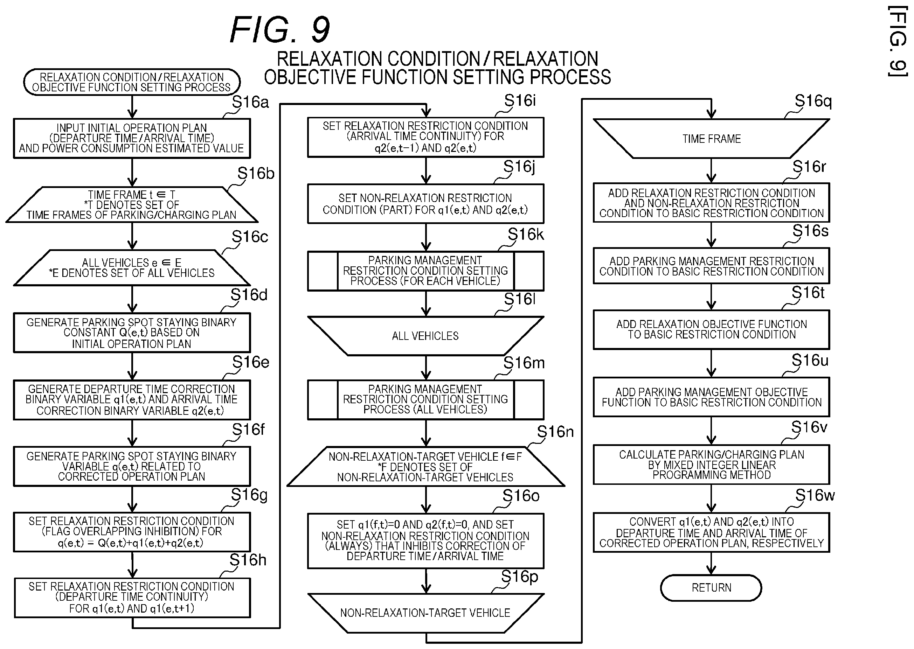

The relaxation restriction condition is a restriction condition not including departure times/arrival times in the initial operation plan 311 of a vehicle included in the vehicle group g selected at step S15. The relaxation objective function is an objective function that minimizes the sum of correction amounts of departure times/arrival times in the initial operation plan 311 for a vehicle included in the vehicle group g selected at step S15. Details of the relaxation restriction condition/relaxation objective function setting process will be described later with reference to FIG. 9. When finishing step S16, the operation plan relaxation unit 73 lets the process flow proceed to step S17.

(Step S17)

The operation plan setting up determination unit 72 determines whether the relaxed operation plan is executable, based on the possibility or impossibility of recalculation of the parking/charging plan at step S16. When calculating the parking/charging plan is possible (step S17: YES), the operation plan setting up determination unit 72 lest the process flow proceed to step S18. When calculating the parking/charging plan is impossible (step S17: NO), the operation plan setting up determination unit 72 lets the process flow proceed to step S19.

(Step S18)

The operation plan setting up determination unit 72 outputs the parking/charging plan 711 of which calculation is found possible at step S17, to the operation planning unit 31, outputs the corrected operation plan 712 to the vehicle non-use period setting unit 42b, and ends the parking/charging plan creation process.

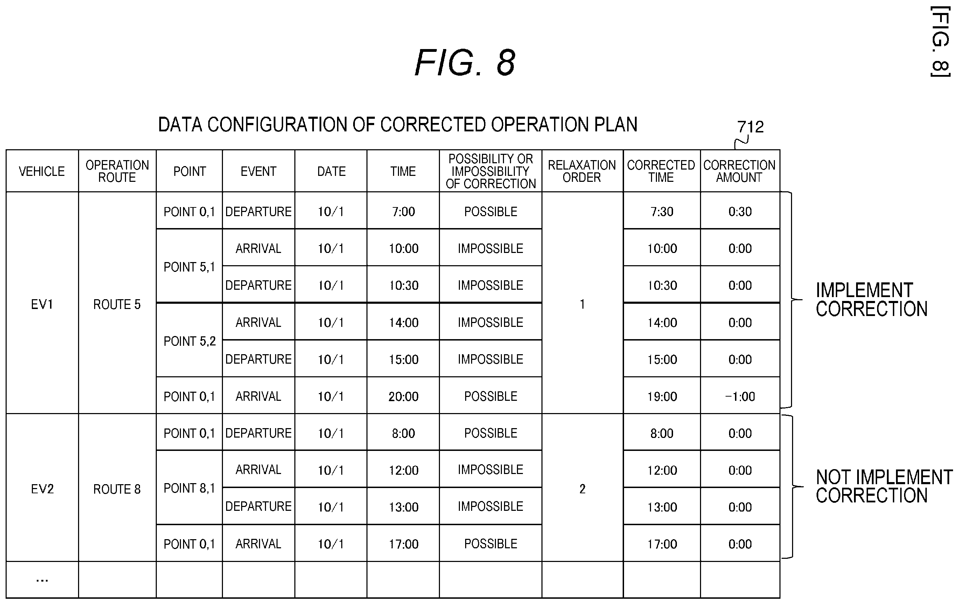

FIG. 8 depicts an example of a data configuration of the corrected operation plan 712. In the corrected operation plan 712, data is entered in each of the "corrected time" and "correction amount" columns in which no data is entered in the initial operation plan 311. "corrected time" is an arrival time or a departure time at each point of each vehicle, the arrival time or the departure time being calculated together at calculation of the parking/charging plan 711 at step S17. A value given by subtracting "time" in the initial operation plan from "corrected time" is entered in the "correction amount" column.

In the example of FIG. 8, correction is implemented on the vehicle "EV1" with "relaxation order" of "1", whereas correction is not implemented on the vehicle "EV2" with "relaxation order" of "2". It should be noted that a departure time and an arrival time that correspond to "impossible" in the "possibility/impossibility of "correction" column are not corrected. This non-correction case is set according to a non-relaxation restriction condition (part), which will be described later.

According to the correction (delaying the departure time at the departure point to 7:30 and advancing the arrival time at the arrival point to 19:00) implemented in FIG. 8, when "EV1" does not meet traveling conditions of "route 5" in the "operation route" column, "t<7:30, 19:00 ≤ t" is set as the vehicle non-use period 42b1 of the fleet management system 1. Based on this set value of the vehicle non-use period 42b1, the fleet management system 1 recalculates the operation plan. The fleet management system 1 then newly creates an initial operation plan 311 that assigns "EV1" to a shorter route. Thus, the parking/charging plan creation process is executed for the newly created initial operation plan 311.

(Step S19)

When a vehicle group g not selected at step S15 is present, the operation plan setting up determination unit 72 lets the process flow return to step S15. When a vehicle group g not selected at step S15 is not present, the operation plan setting up determination unit 72 lets the process flow proceed to step S20. At step S15, to which the process flow has returned from step S19, the operation plan relaxation unit 73 additionally selects another unselected vehicle group g, and lets the process flow proceed to step S16.

(Step S20)

The operation plan setting up determination unit 72 outputs "correction impossible" to the fleet management system 1. It should be noted that a case where the power consumption estimated value 741 exceeds the rated power consumption of the EV to which the parking/charging plan is applied in the first place, a case where a charging amount turns out insufficient after a full-day charging process due to a shortage of power output from an EV charger or a shortage of the capacity of a power-receiving facility, or other similar cases may be separately checked and an alert may be issued to the fleet management system 1.

(Details of Relaxation Restriction Condition/Relaxation Objective Function Setting Process)

FIG. 9 is a flowchart showing details of a relaxation restriction condition/relaxation objective function setting process (step S16 in FIG. 4). In the following, to make the description more understandable, equations will be described for a case where there is one parking spot. That is, the case of the parking spot a=1 will be described, where the subscript a is omitted.

Before a detailed description of the relaxation restriction condition/relaxation objective function setting process, a first-in-last-out restriction, which is a prerequisite to execution of the relaxation restriction condition/relaxation objective function setting process, will be described first.

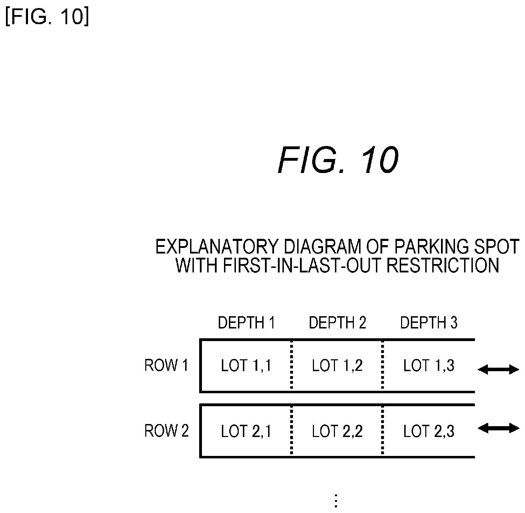

FIG. 10 is an explanatory diagram of a parking lot with a first-in-last-out restriction. The parking lot shown in FIG. 10 is a parking lot where the first vehicle comes in and the last vehicle comes out (first-in-last-out (or last-in-first-out)), vertical rows of parking lots in the depth direction are lined up in a parallel parking formation, and a vehicle is allowed to come in and out from only one side of each row, as is in a bus parking lot. When vehicles to be parked in lots 1, 1, 1, 2, and 1, 3 come into this parking lot, therefore, the vehicle to be parked in the lot 1, 1 is allowed to come in first, the vehicle to be parked in the lot 1, 2 is allowed to come in second, and the vehicle to be parked in the lot 1, 3 is allowed to come in third. When vehicles come out of the parking lot, the vehicle parked in the lot 1, 3 is allowed to come out first, the vehicle parked in the lot 1, 2 is allowed to come out second, and the vehicle parked in the lot 1, 1 is allowed to come out third.

Parallel parking, which is a restriction found in operation of internal combustion engine vehicles, involves combinations of restrictions on the presence/absence of chargers in parking lots, charging times, etc. As a result, parallel parking of EVs requires an EV-specific procedure for assignment of parking lots.

For example, there may be a situation where although the vehicle in the lot 1, 1 is charged completely and is ready to travel, the vehicles in the lots 1, 2 and 1, 3 are still being charged and because of this the vehicle in the section 1, 1 is not allowed to come out of the parking lot. Such a situation is eliminated by optimization to suppress a drop in an EV operation rate.

(Step S16a)

The operation plan relaxation unit 73 inputs again the initial operation plan 311 (departure time/arrival time) and the power consumption estimated value 741 that have been inputted at step S11 (FIG. 4).

(Step S16b)

The operation plan relaxation unit 73 executes a loop of steps S16b to S16q of selecting and executing time frames t one by one from a set of time frames T of the parking/charging plan.

(Step S16c)

The operation plan relaxation unit 73 executes a loop of steps S16c to S16 1 of selecting and executing vehicles e one by one from a set of all vehicles E.

(Step S16d)

The operation plan relaxation unit 73 generates a parking spot staying binary constant $Q(e, t)$ based on the initial operation plan 311. The parking spot staying binary constant $Q(e, t)$ is a binary constant representing the vehicle's staying in the parking spot, based on the initial operation plan 311. $Q(e, t) = 0$ represents the fact that the vehicle e is not in the parking spot in the time frame t, and $Q(e, t) = 1$ represents the fact that the vehicle e stays in the parking spot in the time frame t.

(Step S16e)

The operation plan relaxation unit 73 generates a departure time correction binary variable $q1(e, t)$ and an arrival time correction binary variable $q2(e, t)$. The departure time correction binary variable $q1(e, t)$ is a binary variable that represents the vehicle's staying in the parking spot according to correction of a departure time. $q1(e, t) = 0$ represents the fact that the vehicle e is not in the parking spot in time frame t, and $q1(e, t) = 1$ represents the fact that the vehicle e stays in the parking spot in the time frame t.

An arrival time correction binary variable $q2(e, t)$ is a binary variable representing the vehicle's staying in the parking spot according to correction of an arrival time. $q2(e, t) = 0$ represents the fact that the vehicle e is not in the parking spot in the time frame t, and $q2(e, t) = 1$ represents the fact that the vehicle e stays in the parking spot in the time frame t.

(Step S16f)

The operation plan relaxation unit 73 generates a parking spot staying binary variable $q(e, t)$ related to a corrected operation plan. The parking spot staying binary variable $q(e, t)$ is a binary variable representing the vehicle's staying in the parking spot according to the corrected operation plan combining correction of a departure time and correction of an arrival time, and is expressed by equation (7).

$$q(e, t) = Q(e, t) + q1(e, t) + q2(e, t) \ldots (7)$$

(Step S16g)

The operation plan relaxation unit 73 sets a relaxation restriction condition (flag overlapping inhibition) for the parking spot staying binary variable $q(e, t) = Q(e, t) + q1(e, t) + q2(e, t)$. The relaxation restriction condition (flag overlapping inhibition) is a relaxation restriction condition that inhibits overlapping of parking spot staying flags(prevents a case where $Q(e, t)$, $q1(e, t)$, and $q2(e, t)$ each become 1 simultaneously), and is expressed by equation (8).

$$q(e, t) \leq 1 \ldots (8)$$

(Step S16h)

The operation plan relaxation unit 73 sets a relaxation restriction condition (departure time continuity) for $q1(e, t)$ and $q1(e, t+1)$.

(Step S16i)

The operation plan relaxation unit 73 sets a relaxation restriction condition (arrival time continuity) for $q2(e, t-1)$ and $q2(e, t)$.
Relaxation restriction conditions (departure time continuity and arrival time continuity) set at steps S16h and S16i work as follows. When the nth initial departure time and the nth initial arrival time in the initial operation plan 311 of the vehicle e are denoted as $Tdp(e, n)$ and $Tar(e, n)$, respectively, changes in $Q(e, t)$ as a parking spot staying flag are defined by equations(9) and (10).

$$Q(e, Tdp(e, n) -1) = 1 \text{ and } Q(e, Tdp(e, n)) = 0 \ldots (9)$$

$$Q(e, Tar(e, n)-1) = 0 \text{ and } Q(e, Tar(e, n)) = 1 \ldots (10)$$

In correction of the departure time, a relaxation restriction condition that provides continuity from the initial departure time is expressed as equation (11).

$$q1(e, t) \geq q1(e, t + 1), \text{ where } Tdp(e, n) \leq t < Tar(e, n) - 1 \tag{11}$$

Under this restriction condition, when the departure time is corrected (when $q1(e, t)$ may become 1 after $Tdp(e, n)$), $q1(e, t)$ changes from 1 to 0 only once in the period between the initial departure time and the initial arrival time ($q1(e, t)$ never changes from 0 to 1).
In correction of the arrival time, a relaxation restriction condition that provides continuity up to the initial arrival time is expressed as equation (12).

$$q2(e, t - 1) \leq q2(e, t), \text{ where } Tdp(e, n) < t \leq Tar(e, n) - 1 \tag{12}$$

Under this restriction condition, when the arrival time is corrected (when $q2(e, t)$ may become 1 before $Tar(e, n)$), $q2(e, t)$ changes from 0 to 1 only once in the period between the initial departure time and the initial arrival time ($q2(e, t)$ never changes from 1 to 0).

(Step S16j)

The operation plan relaxation unit 73 sets a non-relaxation restriction condition (part) for $q1(e, t)$ and $q2(e, t)$.
In a case where correction of the initial departure time $Tdp(e, n)$ needs to be inhibited, the non-relaxation restriction condition (part) sets $q1(e, Tdp(e, n)) = 0$. By setting $q1(e, Tdp(e, n)) = 0$, $q1(e, t) = 0$ continues to hold in the period of $Tdp(e, n) \leq t \leq Tar(e, n) -1$ under the relaxation restriction condition (departure time continuity).
In a case where correction of the initial arrival time $Tar(e, n)$ needs to be inhibited, $q2(e, Tar(e, n)-1) = 0$ is set. By setting $q2(e, Tar(e, n)-1) = 0$, $q2(e, n) = 0$ continues to hold in the period of $Tdp(e, t) \leq t \leq Tar(e, n) -1$ under the relaxation restriction condition (arrival time continuity).

(Step S16k)

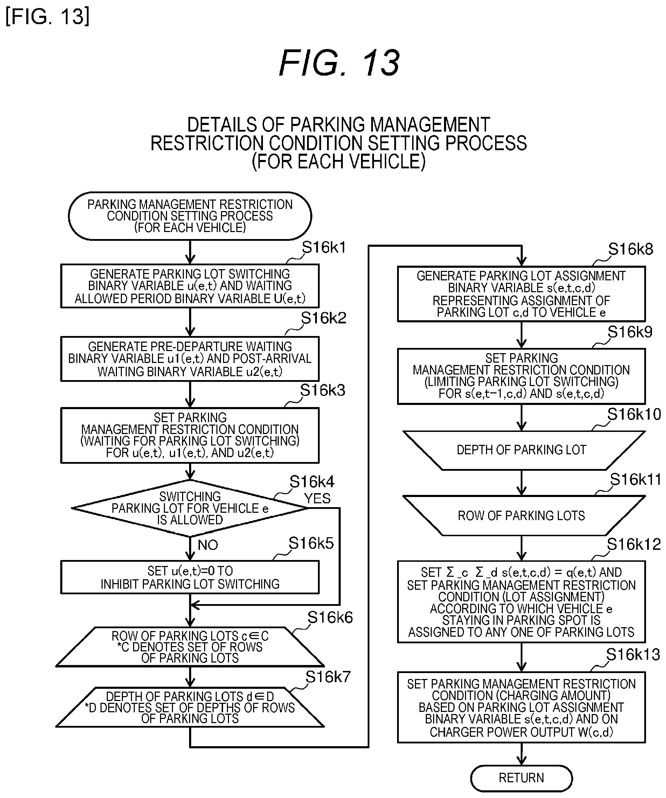

The operation plan relaxation unit 73 executes a parking management restriction condition setting process (for each vehicle). Details of the parking management restriction condition setting process (for each vehicle) will be described later with reference to FIG. 13. At step S16k, a parking management restriction condition for each vehicle is set.

(Step S16l)

The operation plan relaxation unit 73 determines whether a loop of steps S16c to S16l have been executed on all vehicles $e \in E$. When the loop of steps S16c to S161 have been executed on all vehicles $e \in E$, the operation plan relaxation unit 73 lets the process flow proceeds to step S16m. When a vehicle $e \in E$ not subjected to the loop of steps is present, the operation plan relaxation unit 73 lets the process flow proceeds to step S16c. The operation plan relaxation unit 73 selects another unselected vehicle $e \in E$ at step S16c to which the process flow has been returned from step S16l, and lets the process flow proceed to step S16d.

(Step S16m)

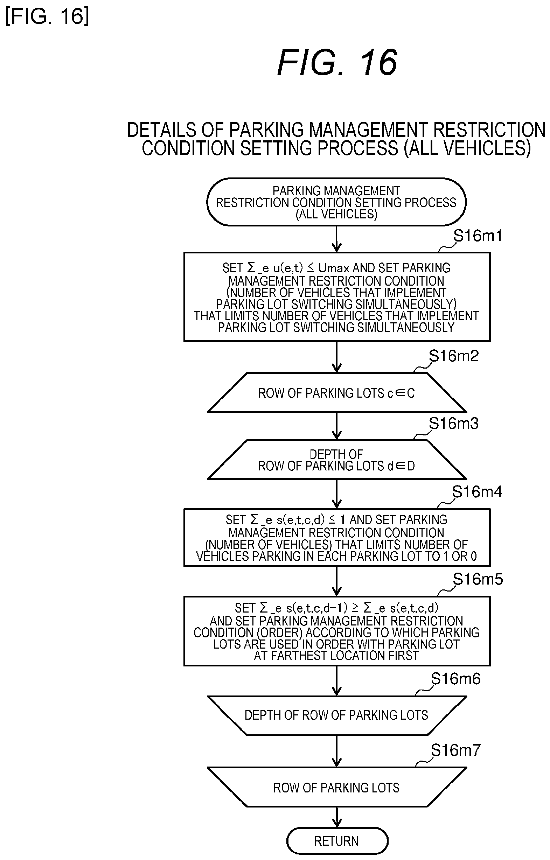

The operation plan relaxation unit 73 executes a parking management restriction condition setting process (all vehicles). Details of the parking management restriction condition setting process (all vehicles) will be described later with reference to FIG. 16. At step S16m, a parking management restriction condition for the sum of all vehicles is set.

(Step S16n)

The operation plan relaxation unit 73 selects not-relaxation-target vehicles f one by one from a set of vehicles F that are not a target for relaxation of the restriction condition and objective function, and executes a loop of steps S16n to S16p on the selected not-relaxation-target vehicles f. The set of vehicles F that are not the target for the relaxation are the same as all vehicles E in the first process of setting the relaxation restriction condition and relaxation objective function (the process equivalent to the initial process carried out by the parking/charging plan calculation unit 71, based on initial operation plan 311, the process treating all vehicles as not-relaxation-target vehicles), but in the second process and other processes to follow, the set of vehicles F are defined as an auxiliary set of a set of relaxation target vehicles, with reference to the relaxation order described in FIG. 5.

(Step S16o)

The operation plan relaxation unit 73 sets a departure time correction binary variable $q1(f, t) = 0$ and an arrival time correction binary variable $q2(f, t) = 0$, and sets a non-relaxation restriction condition (always) that inhibits correction of the departure time/arrival time. Under the non-relaxation restriction condition (always), the departure time correction binary variable $q1(f, t) = 0$ and the arrival time correction binary variable $q2(f, t) = 0$ constantly hold for the not-relaxation-target vehicle f, and therefore correction of the departure time and the arrival time of the not-relaxation-target vehicle f is inhibited.

(Step S16p)

The operation plan relaxation unit 73 determines whether the loop of steps S16n to S16p have been executed on all not-relaxation-target vehicles $f \in F$. When the loop of steps has been executed on all not-relaxation-target vehicles $f \in F$, the operation plan relaxation unit 73 lets the process flow proceed to step S16q. When a not-relaxation-target vehicle $f \in F$ not subjected to the loop of steps is present, the operation plan relaxation unit 73 lets the process flow return to step S16n. At step S16n to which the process flow has been returned from step S16p, the operation plan relaxation unit 73 selects another unselected not-relaxation-target vehicle $f \in F$, and lets the process flow proceed to step S16o.

(Step S16q)

The operation plan relaxation unit 73 determines whether a loop of steps S16b to S16q have been executed for all the time frames $t \in T$. When the loop of steps have been executed for all time frames $t \in T$, the operation plan relaxation unit 73 lets the process flow proceeds to step S16r. When a time frame $t \in T$ for which the loop of steps are not executed is present, the operation plan relaxation unit 73 lets the process flow return to step S16b, selects another unselected time frame $t \in T$, and lets the process flow proceed to step S16c.

(Step S16r)

The operation plan relaxation unit 73 adds the relaxation restriction conditions set at steps S16g, S16h, and S16i and the non-relaxation restriction conditions set at steps S16j and S16o, to the above basic restriction conditions (the basic restriction conditions (change in an electricity storage amount) of equations(2) and (3) and the basic restriction condition (power-receiving capacity) of equation (4)).

(Step S16s)

The operation plan relaxation unit 73 adds the parking management restriction conditions set at steps S16k and S16m, to the above basic restriction conditions (the basic restriction conditions (change in an electricity storage amount) of equations(2) and (3) and the basic restriction condition (power-receiving capacity) of equation (4)).

(Step S16t)

The operation plan relaxation unit 73 adds a relaxation objective function, to the above basic objective functions(the basic objective function of equation (5) (term for minimizing CO2 emission) and the basic objective function of equation (6) (term for minimizing charging cost)). The relaxation objective function minimizes an increment of a parking spot staying period, and is expressed by equation (13). By minimizing a value given by equation (13), the increment of the parking spot staying period is minimized.

$$\Sigma\_e \ \Sigma\_t\{q1(e, \ t) \ + \ q2(e, \ t)\} \ \ldots \ (13)$$

(Step S16u)

The operation plan relaxation unit 73 adds a parking management objective function to the above basic objective functions(the basic objective function of equation (5) (term for minimizing CO2 emission) and the basic objective function of equation (6) (term for minimizing charging cost)).

The parking management objective function includes a parking management objective function (equation (14)) for management of the number of times of parking lot switching, and a parking management objective function (equation (15)) for management of a waiting time for parking switching. Minimizing a value given by equation (14) minimizes the number of times of parking lot switching, thus reducing complexity in vehicle operations. Minimizing a value given by equation (15) brings parking lot switching timing close to a corrected departure time and a corrected arrival time, thus reducing a waiting time.

$$\Sigma\_e \ \Sigma\_t \ u(e, \ t) \ \ldots \ (14)$$

$$\Sigma\_e \ \Sigma\_t \ u1(e, \ t) \ + \ u2(e, \ t) \ \ldots \ (15)$$

(Step S16v)

The parking/charging plan calculation unit 71 calculates a parking/charging plan including the relaxation restriction conditions and relaxation objective functions additionally set at steps S16r, S16s, S16t, and S16u, by a mixed integer linear programming method.

(Step S16w)

The parking/charging plan calculation unit 71 converts the departure time correction binary variable q1(e, t) and the arrival time correction binary variable q2(e, t) that are calculated at step S16v, into a departure time and an arrival time of the corrected operation plan 712 (FIG. 8), respectively.

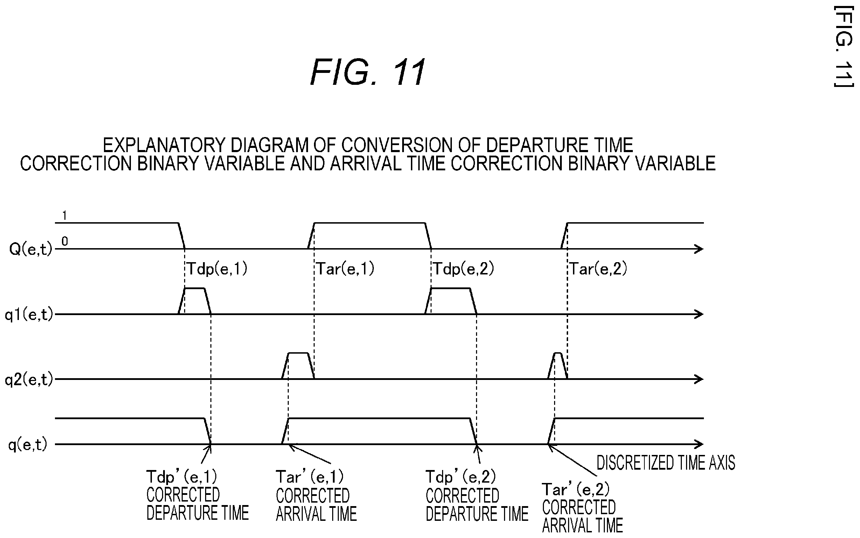

FIG. 11 is an explanatory diagram of conversion of the departure time correction binary variable q1(e, t) and the arrival time correction binary variable q2(e, t), the conversion being carried out at step S16w. As shown in FIG. 11, according to a result of calculation of the parking/charging plan at step S16v, a point of time at which the departure time correction binary variable q1(e, t) changes from 1 to 0 represents a corrected departure time, and a point of time at which the arrival time correction binary variable q2(e, t) changes from 0 to 1 represents a corrected arrival time.

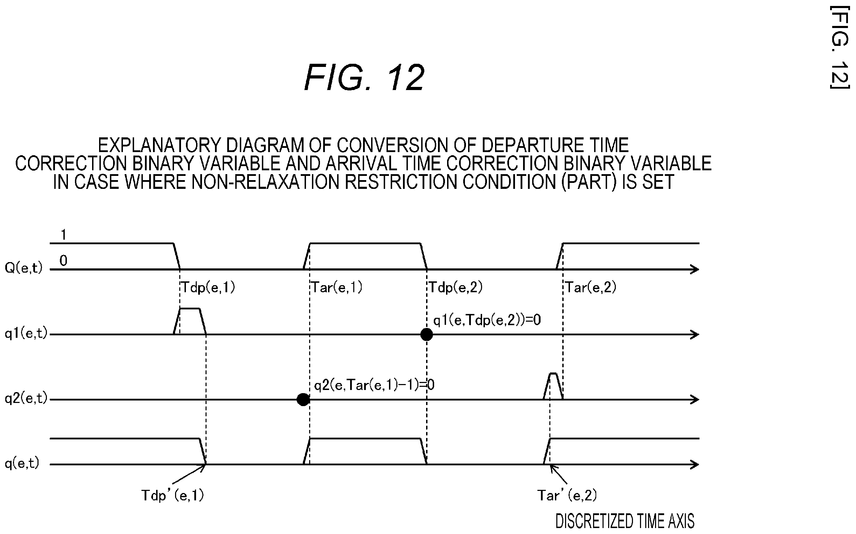

FIG. 12 is an explanatory diagram of conversion of the departure time correction binary variable and the arrival time correction binary variable in a case where the non-relaxation restriction condition (part) is set. In FIG. 12, at step S16j, $q2(e, Tar(e, 1)-1) = 0$ is set at the initial arrival time $Tar(e, 1)$ and $q1(e, Tdp(e, 2)) = 0$ is set at the initial departure time $Tdp(e, 2)$, as the non-relaxation restriction condition (part). FIG. 12 thus demonstrates that correction of the initial arrival time $Tar(e, 1)$ and the initial departure time $Tdp(e, 2)$ is inhibited, as compared to FIG. 11.

(Details of Parking Management Restriction Condition Setting process (for Each Vehicle))

FIG. 13 is a flowchart showing details of the parking management restriction condition setting process (for each vehicle) (step S16k (FIG. 9)).

(Step S16k1)

The operation plan relaxation unit 73 generates a parking lot switching binary variable $u(e, t)$ and a waiting allowed period binary constant $U(e, t)$.

The parking lot switching binary variable $u(e, t)$ is a binary variable indicating the possibility or impossibility of switching of a parking lot for the vehicle e in the time frame t during the vehicle's staying in the parking spot. As it will be describe with reference to equation (19), when $u(e, t) = 1$, parking lot switching is allowed during the vehicle's staying in the parking spot, regardless of the values of $q(e, t-1)$ and $q(e, t)$. When $u(e, t) = 0$, however, parking lot switching is not allowed.

The waiting allowed period binary constant $U(e, t)$ is a binary constant representing a period in which the parking lot can be switched (a period in which the driver remains in the vehicle) before and after the initial departure time $Tdp(e, n)$ and the initial arrival time $Tar(e, n)$. The waiting allowed period binary constant $U(e, t)$ is defined as follows.

$U(e, t) = 1$ (the parking lot can be switched (the driver remains in the vehicle))

This definition holds, however, in the time frame t that satisfies $Tdp(e,n) - Twait \leq t < Tar(e,n) + Twait$.

$U(e, t) = 0$ (the parking lot cannot be switched (the driver is not in the vehicle))

This definition holds, however, in the time frame t different from the above time frame t.

The waiting period constant Twait shown above represents the number of time frames in which the driver's waiting in the vehicle is allowed in a period other than a traveling period (the number of time frames set by waiting restriction setting unit 82d (FIGS. 2 and 3)). For example, when each time frame t has a time span $\Delta t$ of 30 minutes and an in-vehicle waiting time is 60 minutes, it gives Twait=2.

It should be noted that although the waiting period constant Twait subtracted from the initial departure time $Tdp(e, n)$ and the waiting period constant Twait added to the initial arrival time $Tar(e, n)$ are the same, they may be made different from each other.

(Step S16k2)

The operation plan relaxation unit 73 generates a pre-departure waiting binary variable $u1(e, t)$ and a post-arrival waiting binary variable $u2(e, t)$. The pre-departure waiting binary variable $u1(e, t)$ and the post-arrival waiting binary variable $u2(e, t)$ are binary variables representing a waiting period before departure and a waiting period after arrival, respectively.

(Step S16k3)

The operation plan relaxation unit 73 sets a parking management restriction condition (waiting for parking lot switching) for the binary variables $u(e, t)$, $u1(e, t)$, and $u2(e, t)$ generated at steps S16k1 and S16k2. The parking management restriction condition (waiting for parking lot switching) is a restriction condition that limits parking lot switching to a waiting allowed period, and is expressed as equation (16).

$$u(e, t) \leq u1(e, t) + u2(e, t) \leq U(e, t) \quad \ldots \quad (16)$$

A restriction condition that provides a waiting period up to a corrected departure time with continuity is given by equation (17).

$$u1(e, t) \leq u1(e, t+1) + (1 - q(e, t+1)) \ldots (17)$$

This equation holds, providing that Tdp(e, n) -Twait ≤ t < Tar(e, n)

A restriction condition that provides a waiting period starting from a corrected arrival time with continuity is given by equation (18).

$$u2(e, t-1) + (1 - q(e, t-1)) \geq u2(e, t) \ldots (18)$$

This equation holds, providing that Tdp(e,n) < t ≤ Tar(e,n)+Twait-1

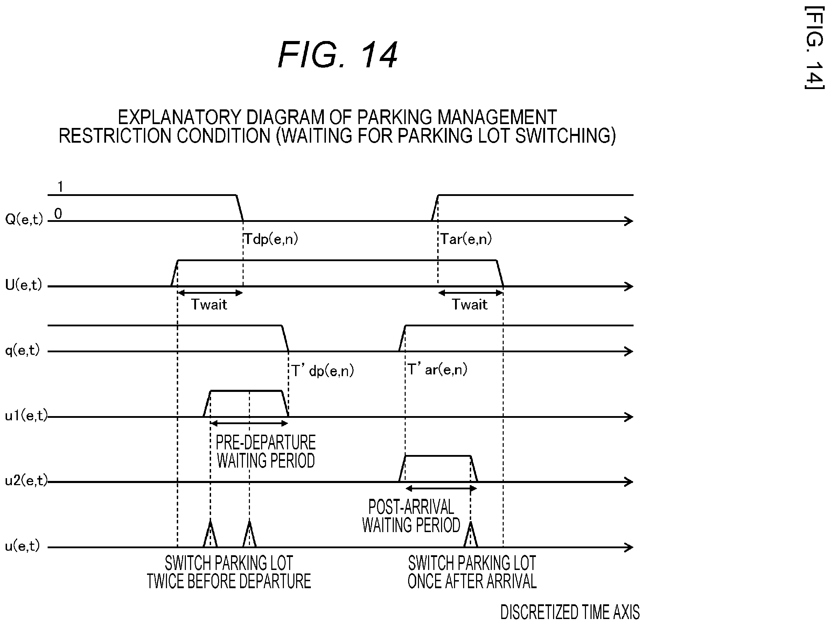

FIG. 14 is an explanatory diagram of the parking management restriction condition (waiting for parking lot switching). As shown in FIG. 14, in the period between the start of the waiting allowed period (the waiting allowed period binary constant U(e, t) = 0→1) and the initial arrival time Tar(e, n), when q(e, t) = 1 holds(before the corrected departure time), u1(e, t) changes from 0 to 1 only once (and never changes from 1 to 0). In the period between the start of the waiting allowed period (the waiting allowed period binary constant U(e, t) = 0→1) and the initial arrival time Tar(e, n), when q(e, t) = 0 holds(after the corrected departure time), u1(e, t) is allowed to change from 1 to 0.

In addition, in the period between the initial departure time Tdp(e, n) and the end of the waiting allowed period (the waiting allowed period binary constant U(e, t) = 1→0), when q(e, t) = 1 holds(after the corrected arrival time), u2(e, t) changes from 1 to 0 only once (and never changes from 0 to 1). When q(e, t) = 0 holds(before the corrected arrival time), u2(e, t) is allowed to change from 0 to 1.

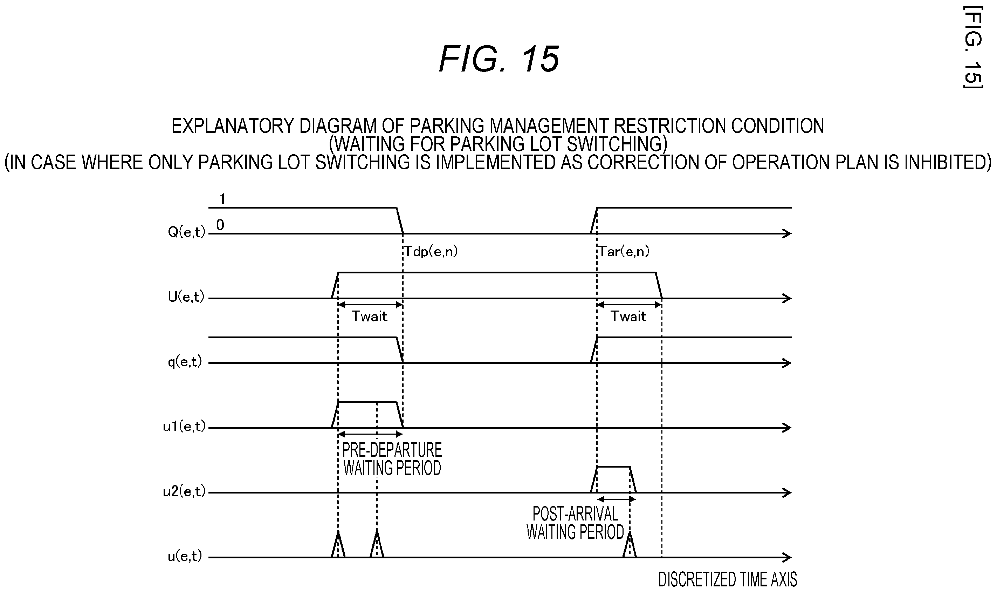

FIG. 15 is an explanatory diagram of the parking management restriction condition (waiting for parking lot switching) in a case where only parking lot switching is carried out as correction of the operation plan is inhibited. In the case where only parking lot switching is carried out as correction of the operation plan is inhibited, q(e, t) = Q(e, t) holds. Therefore, as shown in FIG. 15, pre-departure switching of the parking lot for the vehicle e is carried out before the initial departure time Tdp(e, n), and post-arrival switching of the parking lot for the vehicle e is carried out after the initial arrival time Tar(e, n).

(Step S16k4)

Referring to the possibility or impossibility of switching of the parking lot for each vehicle that is set by the vehicle restriction setting unit 82c, the operation plan relaxation unit 73 determines whether switching of the parking lot for the vehicle e is allowed. When switching of the parking lot for the vehicle e is allowed, the operation plan relaxation unit 73 lets the process flow to proceed to step S16k6. When switching of the parking lot is not allowed, the operation plan relaxation unit 73 lets the process flow proceed to step S16k5.

(Step S16k5)

The operation plan relaxation unit 73 sets the parking lot switching binary variable u(e, t) = 0 to inhibit parking lot switching.

(Step S16k6)

The operation plan relaxation unit 73 executes a loop of steps S16k6 to S16k11 on, for example, all rows of parking lots c ∈ C (C denotes a set of rows of parking lots), which are shown in FIG. 10.

(Step S16k7)

The operation plan relaxation unit 73 executes a loop of steps S16k7 to S16k10 on, for example, all depths of parking lots d ∈ D (D denotes a set of respective depths of rows of parking lots), which are shown in FIG. 10.

(Step S16k8)

The operation plan relaxation unit 73 generates a parking lot assignment binary variable s(e, t, c, d) representing assignment of a parking lot c, d (c denotes a row of parking lots, d denotes a depth) to the vehicle e. The parking lot assignment binary variable s(e, t, c, d) is defined such that s(e, t, c, d) = 0 represents a case where the vehicle e is not parked in a parking lot c, d in the time frame t and s(e, t, c, d) = 1 represents a case where the vehicle e is parked in the parking lot c, d in the time frame t.

(Step S16k9)

The operation plan relaxation unit 73 sets a parking management restriction condition (limiting parking lot switching) for a parking lot assignment binary variable s(e, t-1, c, d) in the time frame t -1 and s(e, t, c, d) in the time frame t.

The parking management restriction condition (limiting parking lot switching) is a restriction condition that limits parking lot switching of each vehicle e moving into the parking lot c, d during its stay in the parking spot, and is expressed as equation (19). |*| stands for the absolute value of *.

$$|s(e, t, c, d) - s(e, t - 1, c, d)| \leq (1 - (q(e, t - 1) + q(e, t))/2) * 2 + u(e, t) \qquad (19)$$

The first term on the right side of equation (19) is 0 when the vehicle's staying in the parking spot continues in the time frame t-1 and the time frame t, is 2 when the vehicle's being absent from the parking spot continues in those time frames, and is 1 when a change from "staying" to "being absent" or from "being absent" to "staying" occurs. When u(e, t) = 0, therefore, in the case where the vehicle's staying in the parking spot continues, s(e, t, c, d) = s(e, t-1, c, d) holds(that is, parking lot switching is not allowed). When the state of staying in the parking spot changes, s (e, t, c, d) = s (e, t-1, c, d) $\pm$ 1 holds (that is, changing a parking state is allowed). When the vehicle's being absent from the parking spot continues, from equation (20) to be described later, s(e, t, c, d) = s(e, t-1, c, d) = 0 holds, which indicates that the restriction is always met.

(Step S16k10)

When all depths of parking lots d are selected at step S16k7, the operation plan relaxation unit 73 lets the process flow proceed to step S16k11. When a depth of parking lots d that is not selected at step S16k7 is present, the operation plan relaxation unit 73 lets the process flow return to step S16k7. The operation plan relaxation unit 73 selects another unselected depth of parking lots d at step S16k7, to which the process flow has been returned from step S16k10, and lets the process proceed to step S16k8.

(Step S16k11)

When all the rows of parking lots c are selected at step S16k6, the operation plan relaxation unit 73 lets the process flow proceeds to step S16k12. When a row of parking lots c that is not selected at step S16k6 is present, the operation plan relaxation unit 73 lets the process flow return to step S16k6. The operation plan relaxation unit 73 selects another unselected row of parking lots c at step S16k6, to which the process flow has been returned from step S16k11, and lets the process flow proceed to step S16k7.

(Step S16k12)

The operation plan relaxation unit 73 sets a parking management restriction condition (lot assignment). The parking management restriction condition (lot assignment) is a restriction condition according to which the vehicle e staying in the parking spot is assigned to any one of parking lots, and is set as equation (20). Equation (20) indicates that a total of s(e, t, c, d) for all lots is equal to q(e, t).

$$\Sigma\_c\ \Sigma\_d\ s(e,\ t,\ c,\ d) = q(e,\ t)\ \ldots\ (20)$$

(Step S16k13)

The operation plan relaxation unit 73 sets a parking management restriction condition (charging amount). The parking management restriction condition (charging amount) is a restriction condition on a charging amount, the restriction condition being based on the parking lot assignment, and is set as equation (21).

$$y(e,\ t)\ \leq\ \Sigma\_c\ \Sigma\_d\ W(c,\ d)\ \times\ s(e,\ t,\ c,\ d)\ \ldots\ (21)$$

y(e, t) on the left side of equation (21) denotes a charging amount of the vehicle e in the time frame t, and a constant W(c, d) on the right side denotes an amount of power (kWh/time frame) the charger in the parking lot c, d can put out. When a roughly calculated charging time loss resulting from parking lot switching is taken into consideration, equation (21) can be modified into equation (22). A constant Wu(c, d) in equation (22) represents a decrement of a charging power amount that results from the charging time loss.

y(e, t) ≤ (Σ_c Σ_d W(c, d) × s(e, t, c, d)) - Wu(c, d) × u(e, t)     (22)

(Details of Parking Management Restriction Condition Setting process (All Vehicles))

FIG. 16 is a flowchart showing details of a parking management restriction condition setting process (all vehicles) (step S16m in FIG. 9).

(Step S16m1)

The operation plan relaxation unit 73 sets a parking management restriction condition (number of vehicles that implement parking lot switching simultaneously) that limits the number of vehicles that execute parking lot switching simultaneously to a constant Umax or less. The parking management restriction condition (number of vehicles that implement parking lot switching simultaneously) is expressed by equation (23). The parking management restriction condition (number of vehicles that implement parking lot switching simultaneously) is necessary when the size of a vehicle steering space is limited. Strictly speaking, the width Δt of the time frame t is reduced as Umax=1 is set, so that a plan to allow vehicles to move one by one is set up.

$$\Sigma\_e \ u(e, \ t) \ \leq \ Umax \ \ldots \ (23)$$

(Step S16m2)

The operation plan relaxation unit 73 executes a loop of steps S16m2 to S16m7 on, for example, all rows of parking lots c ∈ C (C denotes a set of rows of parking lots), which are shown in FIG. 10.

(Step S16m3)

The operation plan relaxation unit 73 executes a loop of steps S16m3 to S16m6 on, for example, all depths of parking lots d ∈ D (D denotes a set of depths of parking lots), which are shown in FIG. 10.

(Step S16m4)

The operation plan relaxation unit 73 sets a parking management restriction condition (the number of vehicles) that limits the number of vehicles parked in each parking lot to 1 or 0. The parking management restriction condition (the number of vehicles) is expressed by equation (24). The parking management restriction condition (the number of vehicles) limits a total of s(e, t, c, d) for all vehicles e to 1 or 0.

$$\Sigma\_e \ s(e, \ t, \ c, \ d) \ \leq \ 1 \ \ldots \ (24)$$

(Step S16m5)

The operation plan relaxation unit 73 sets a parking management restriction condition (order) according to which parking lots are used in order with a parking lot at the farthest location first. The parking management restriction condition (order) is expressed by equation (25). According to equation (25), when the number of vehicles parked in the parking lot c, d is 1 for the depth d (where d ≥ 2), the number of vehicles for a depth d-1 is also 1. When the number of vehicles for the depth d is 0, the number of vehicles for the depth d-1 is either 0 or 1.

$$\Sigma\_e \ s(e, \ t, \ c, \ d-1) \ \geq \ \Sigma\_e \ s(e, \ t, \ c, \ d) \ \ldots \ (25)$$

When parking lots are arranged into a parallel parking formation, as shown in FIG. 10, carrying out parking lot switching requires that not only the parking lot switching target vehicle but also a vehicle parked closer to the entrance/exit gate than the parking lot switching target vehicle in the parallel parking formation be moved. This requirement is met by setting the parking management restriction condition (order). If a vehicle parked in a parking lot on the far side distant from the entrance/exit gate of the parking lots is moved first and a vehicle parked on this side closer to the entrance/exit gate is not moved, it is against the parking management restriction condition (order). Thus, setting the parking management restriction condition (order) limits solutions to a solution according to which both the parking lot switching target vehicle and the vehicle parked in the parking lot closer to the entrance/exit gate than the parking lot switching target vehicle are moved or a solution according to which a different vehicle is not parked in the parking lot closer to the entrance/exit gate than the parking lot switching target vehicle.

(Step S16m6)

When all depths of parking lots d are selected at step S16m3, the operation plan relaxation unit 73 lets the process flow proceed to step S16m7. When a depth of parking lots d that is not selected at step S16m3 is present, the operation plan relaxation unit 73 lets the process flow return to step S16m3. The operation plan relaxation unit 73 selects another unselected depth of parking lots d at step S16m3, to which the process flow has been returned from step S16m6, and lets the process flow proceed to step S16m4.

(Step S16m7)

When all rows of parking lots c are selected at step S16m2, the operation plan relaxation unit 73 ends the parking management restriction condition setting process (all vehicles). When a row of parking lots c that is not selected at step S16m2 is present, the operation plan relaxation unit 73 lets the process flow proceed to step S16m2. The operation plan relaxation unit 73 selects another unselected row of parking lots c at step S16m2, to which the process flow has been returned from step S16m7, and lets the process flow proceed to step S16m3.

(Modification of First Embodiment)

· Parking lots of a non-parallel parking formation

The above description has been made on the assumption that parking lots are arranged into the parallel parking formation shown in FIG. 10. However, not just the parking lots arranged into the parallel parking formation can be handled. Parking lots not arranged into the parallel parking formation can also be handled by limiting the depth d to 1. In FIG. 10, each row c has the same number of depths d. However, each row c may have a different number of depths d. In addition, the parking lot c, d not equipped with a charger can be handled by setting an amount of power W(c, d) the charger in the parking lot c, d can put out, to 0.

· Operation Using Parking Lots That Are Combination of Lots for Charging and Lots for Waiting

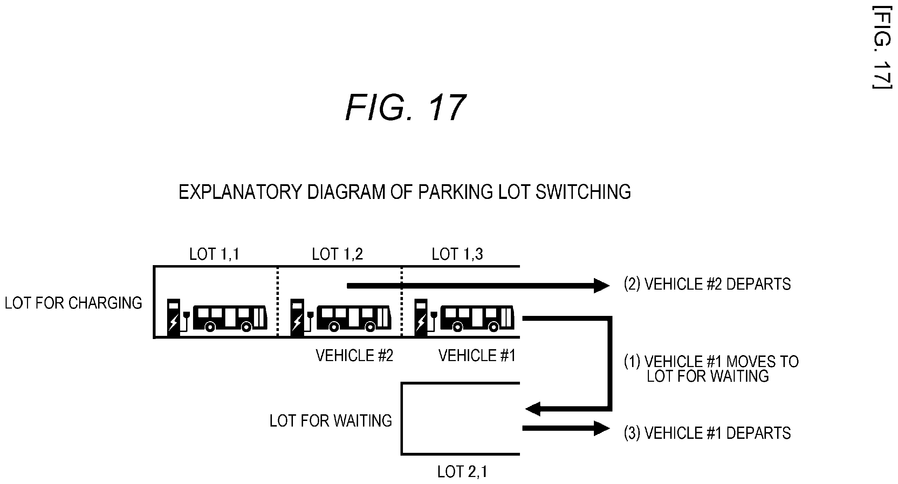

There may be a case where a plurality of parking lots different in the number of rows c and depths d and the presence or absence of the charger are prepared and parking lot switching between the plurality of parking lots is allowed. In such a case, as shown in FIG. 17, operation using a combination of lots for charging and lots for waiting can be implemented.
As shown in an example of FIG. 17, (1) a vehicle #1 in a lot 1, 3 moves to a lot 2,1 for waiting, and then (2) a vehicle #2 in a lot 1, 2 departs, and, finally, (3) the vehicle #1 in the lot 2,1 for waiting departs. This type of operation can be implemented.

· Inhibition of Correction of Departure Time/Arrival Time and Waiting Period Constant Twait

At calculation of the parking/charging plan at step S16 (FIG. 4), a non-relaxation restriction condition (part) may be set for at least some of vehicles e to inhibit correction of the departure time/arrival time as much as possible and the waiting period constant Twait may be set to a sufficiently large value. For example, at the first calculation of the parking/charging plan at step S16 (FIG. 4), the non-relaxation restriction condition (part) is set for all vehicles e and the waiting period constant Twait is set to a proper value. This increases opportunities for parking lot switching, in which case the feasibility of the operation plan and the parking/charging plan may be increased without correcting the operation plan. In this case, the description of each parking management restriction condition holds true when the corrected departure time is interpreted as the initial departure time and the corrected arrival time is interpreted as the initial arrival time.

· Management of Waiting Time for Parking Lot Switching

The restriction condition and objective function on the pre-departure waiting binary variable u1(e, t) and the post-arrival waiting binary variable u2(e, t) may be omitted to dispense with management of a waiting time for parking lot switching, in which case only management of the number of times of parking lot switching is carried out.

· Extended Application to A Plurality of Parking Spots

In the above first embodiment, for simplicity, the case of a single parking spot has been described. When a plurality of parking spots are present, the parking spot staying binary variable q(e, t), the parking lot assignment binary variable s(e, t, c, d), the parking lot switching binary variable u(e, t), the initial departure time Tdp(e, n), and the initial arrival time Tar(e, n) for each parking spot a are made specific to the parking spot a. Specifically, for each parking spot a, a parking spot staying binary variable q(e, t, a), a parking lot assignment binary variable s(e, t, a, c, d), a parking lot switching binary variable u(e, t, a), an initial departure time Tdp(e, n, a), and an initial arrival time Tar(e, n, a) are defined to deal with the case where a plurality of parking spots are present.

A series of relaxation restriction conditions, relaxation objective functions, parking management restriction conditions, and parking management objective functions are thus described in the form of loop processes or total values related to the parking spot a.

For example, a state of the vehicle's staying at the parking spot and correction of the departure time/arrival time can be expressed for each parking spot a by equation (26).

$$q(e,\ t,\ a)\ =\ Q(e,\ t,\ a)\ +\ q1(e,\ t,\ a)\ +\ q2(e,\ t,\ a)\ ...$$

$$(26)$$

By expressing the relaxation restriction condition (flag overlapping inhibition) as equation (27), the number of parking spots at which vehicles e stay simultaneously is limited to one or 0.

$$\Sigma\_a\ q(e, t, a) = \Sigma\_a\ (Q(e, t, a) + q1(e, t, a) + q2(e, t, a)) \leq 1 \qquad (27)$$

The parking management restriction condition (lot assignment) is expressed for each parking spot a by equation (28) .

$$\Sigma\_c\ \Sigma\_d\ s(e,\ t,\ a,\ c,\ d)\ =\ q(e,\ t,\ a)\ ...\ (28)$$

The parking management restriction condition (charging amount) is expressed for each parking spot a by equation (29) .

$$y(e,\ t,\ a)\ \leq\ \Sigma\_c\ \Sigma\_d\ W(a,\ c,\ d)\ \times\ s(e,\ t,\ a,\ c,\ d)\ ...$$

$$(29)$$

In a similar manner, other equations can also be written for each of a plurality of parking spots.

(Effects of First Embodiment)

According to the above first embodiment, when the initial operation plan created by the existing FMS cannot be executed in accordance with the parking/charging plan, the initial departure time/initial arrival time of the initial operation plan are corrected, and the parking/charging plan corresponding to the corrected operation plan is recalculated. Correction of the departure time/arrival time by the corrected operation plan is set in the vehicle non-use period of the existing FMS. This allows the existing FMS to recalculate an operation plan reflecting EV operation restrictions(e.g., EV assignment to a shorter operation route).

[Second Embodiment]

In the first embodiment, when the initial operation plan cannot be executed, the operation plan is corrected in such a way as to delay the departure time of the vehicle and advance the arrival time of the same at each point, and optimization calculation of the parking/charging plan is executed again. This makes the operation plan feasible and offers the parking/charging plan corresponding to the operation plan.

In the second embodiment, on the other hand, an extent to which the departure time of the vehicle is advanced and the arrival time of the same is delayed at each point until the executable initial operation plan becomes not executable is displayed to an operator of the fleet management system 1, as an executability margin. The operator, therefore, is able to change the operation plan by manual operation, based on the executability margin.

The second embodiment will be described with focus placed on its difference with the first embodiment.

(Configuration of Vehicle integrated Management System 2S According to Second Embodiment)

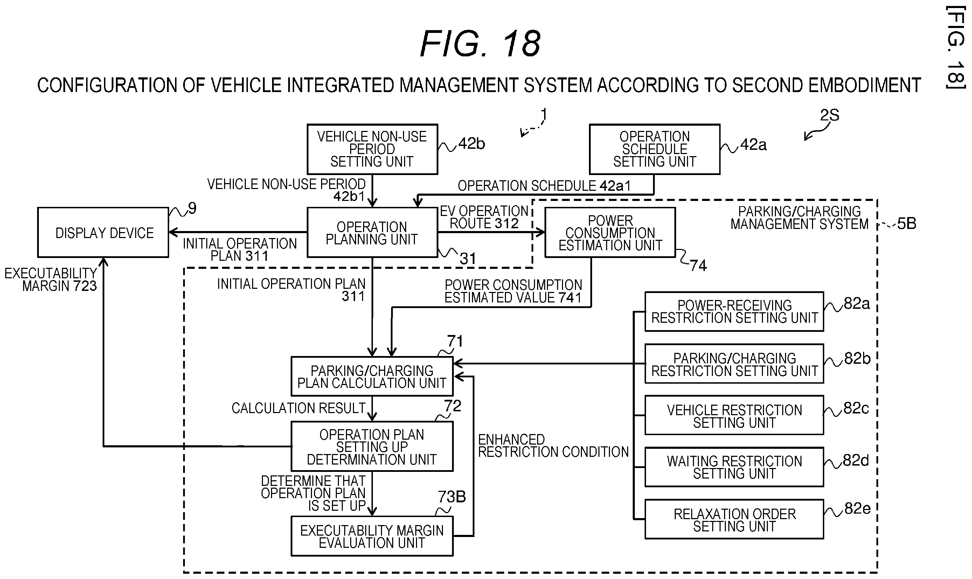

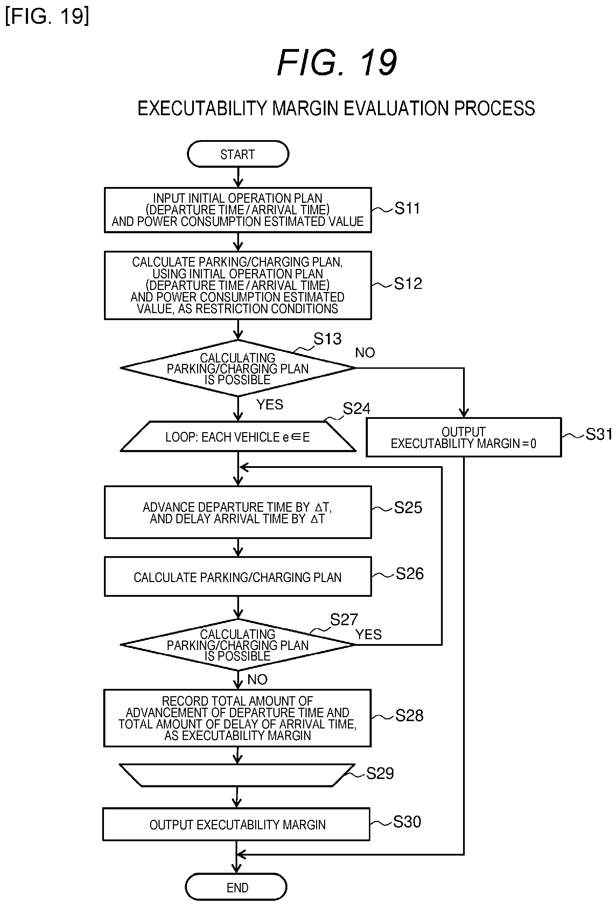

FIG. 18 depicts an example of a configuration of a vehicle integrated management system 2S according to the second embodiment. The vehicle integrated management system 2S is different from the vehicle integrated management system 1S according to the first embodiment in that a parking/charging management system 5B includes an executability margin evaluation unit 73B in place of the operation plan relaxation unit 73. Except this point, the vehicle integrated management system 2S and the parking/charging management system 5B are the same as the vehicle integrated management system 1S and the parking/charging management system 5B according to the first embodiment. A processing function of the executability margin evaluation unit 73B will be described later with reference to FIG. 19.

(Details of Executability Margin Evaluation Process)

FIG. 19 is a flowchart showing an example of an executability margin evaluation process according to the second embodiment. The executability margin evaluation process according to the second embodiment incudes steps S11 to S13 identical with S11 to S13 of the parking/charging plan creation process (FIG. 4) according to the first embodiment, and step S24 and other steps to follow that are different from steps of the parking/charging plan creation process.

(Step S13)

The operation plan setting up determination unit 72 determines whether calculating the parking/charging plan is possible at step S12. When calculating the parking/charging plan is possible (step S13: YES), the operation plan setting up determination unit 72 lets the process flow proceed to step S24. When calculating the parking/charging plan is impossible (step S13: NO), the operation plan setting up determination unit 72 lets the process flow proceed to step S31.

(Step S24)

The executability margin evaluation unit 73B executes a loop of steps S24 to S29 on each vehicle e of the set of all vehicles E, the vehicle e being a target for the initial operation plan 311. At step S24, the executability margin evaluation unit 73B selects an unselected vehicle e from the set of all vehicles E, and lets the process flow proceed to step S25.

(Step S25)

The executability margin evaluation unit 73B performs correction of advancing the departure time of the vehicle e selected at step S24, the departure time being set in the initial operation plan 311, by $\Delta T$ and delaying the arrival time of the same by $\Delta T$, thereby enhancing restriction conditions on the parking/charging plan.

(Step S26)

The parking/charging plan calculation unit 71 recalculates the parking/charging plan under the restriction conditions enhanced at step S25.

(Step S27)

The operation plan setting up determination unit 72 determines whether calculating the parking/charging plan is possible at step S26. When calculating the parking/charging plan is possible (step S27: YES), the operation plan setting up determination unit 72 lets the process flow proceed to step S25. When calculating the parking/charging plan is impossible (step S27: NO), the operation plan setting up determination unit 72 lets the process flow proceed to step S28.

(Step S28)

For each vehicle, the operation plan setting up determination unit 72 records a total of advancements of the departure time and a total of delays of the arrival time, the advancements/delays being made at step S25, as an executability margin 723.

(Step S29)

When all the vehicles e are selected at step S24, the operation plan setting up determination unit 72 lets the process flow proceed to step S30. When a vehicles e unselected at step S24 is present, the operation plan setting up determination unit 72 lets the process flow return to step S24, at which another unselected vehicle e is selected, after which the process flow proceeds to step S25.

(Step S30)

The operation plan setting up determination unit 72 outputs the executability margin 723 recorded at step S28, to the fleet management system 1. The fleet management system 1 displays the executability margin 723 on a display device 9.

(Step S31)

The operation plan setting up determination unit 72 outputs "executability margin 723 = 0" to the fleet management system 1. The fleet management system 1 displays "executability margin 723 = 0" on the display device 9.

(Display of Executability Margin 723)

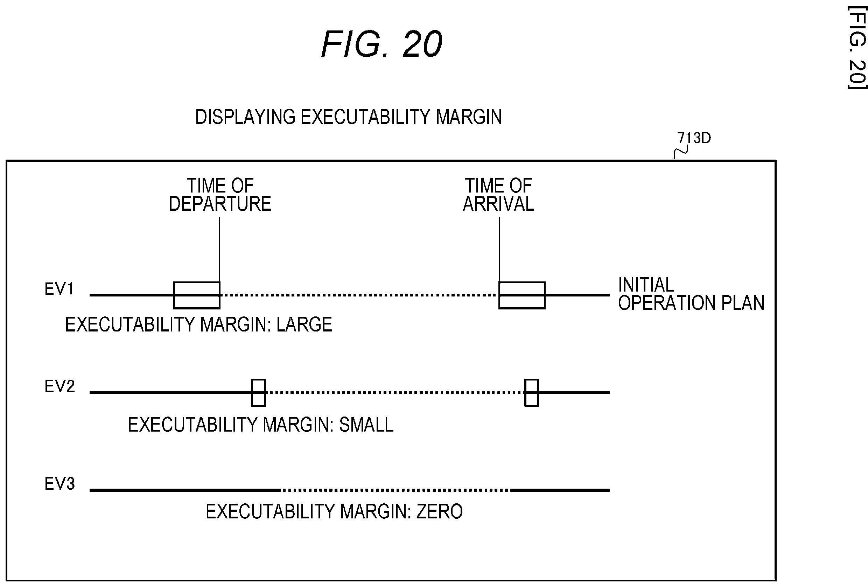

FIG. 20 depicts an example of display of the executability margin 723. A range in which the departure time of each vehicle can be advanced from the initial departure time set in the initial operation plan 311 and a range in which the arrival time of each vehicle can be delayed from the initial arrival time set in the initial operation plan 311 are displayed in the form of a bar graph on a display screen 713D of the display device 9. Observing the lengths of bars in the graph, the operator can intuitively grasp the magnitude of an executability margin or compare respective executability margins of different EVs.
Embodiments of the present invention have been described above in detail. The present invention is not limited to the above embodiments, and may be modified in various forms within a range in which such a modification does not depart from the substance of the present invention. For example, the above embodiments have been described in detail for easy understanding of the present invention, and are not necessarily limited to an embodiment including all constituent elements described above. Some of constituent elements of the above embodiments may have another constituent element added thereto, or be deleted or replaced with another constituent element.
Some or all of the above constituent elements, functional units, processing units, processing means, and the like may be provided in the form of hardware, such as properly designed integrated circuits. In addition, the above constituent elements, functional units, and the like may be provided in the form of software-based programs by causing a processor to interpret and execute programs for implementing functions. Information for implementing functions, such as programs, tables, and files, may be stored in a storage device, such as a memory, a hard disk, and a solid state drive (SSD), or in a recording medium, such as an IC card, an SD card, and a DVD.
In the above embodiments, a group of control lines/data lines considered to be necessary for description are illustrated, and all control lines/information lines packaged in systems are not always illustrated. It is safe to assume that, actually, almost the entire constituent elements are interconnected.
A form of arrangement of functions and data of the fleet management system 1 and parking/charging management system 5 described above is an example. The form of arrangement of functions and data of the fleet management system 1 and parking/charging management system 5 can be changed to the optimum form of arrangement, from the viewpoint of the performance, processing efficiency, communication efficiency, etc., of hardware and software each system has.

Reference Signs List

| | |
|---|---|
| 1S, 2S | vehicle integrated management system |
| 1 | fleet management system |
| 5, 5B | parking/charging management system |
| 5B | parking/charging management system |
| 9 | display device |
| 31 | operation planning unit |
| 71 | parking/charging plan calculation unit |
| 72 | operation plan setting up determination unit |

| 73 | operation plan relaxation unit |
|---|---|
| 73B | executability margin evaluation unit |
| 311 | initial operation plan |
| 711 | parking/charging plan |
| 712 | corrected operation plan |
| 723 | executability margin |

**Claims**

1. A parking/charging management system that calculates a parking/charging plan including a charging schedule of an electric vehicle at a parking spot furnished with a charger and that includes a storage device and a processing device, the parking/charging management system comprising:

   a parking/charging plan calculation unit that calculates the parking/charging plan, using an operation plan including a departure time at which the electric vehicle departs from the parking spot and an arrival time at which the electric vehicle arrives at the parking spot, a restriction on the electric vehicle, and a restriction on the charger, as restriction conditions; and
   an operation plan setting up determination unit that when the parking/charging plan calculation unit can calculate the parking/charging plan, determines the operation plan to be executable, and that when the operation plan is executable, outputs the parking/charging plan, wherein
   the parking/charging plan calculation unit calculates the parking/charging plan, using a restriction on a layout of a parking lot in which the electric vehicle is parked at the parking spot, as the restriction condition.

2. The parking/charging management system according to claim 1, wherein
   the restriction on the layout of the parking lot is a restriction for a last-in-first-out layout in which a plurality of the parking lots are lined up in a direction in which the electric vehicle comes into the parking lots, and the electric vehicle having come into the plurality of parking lots last parks first as the electric vehicle having come into the plurality of parking lots first departs first.

3. The parking/charging management system according to claim 1, wherein
   the parking/charging plan calculation unit calculates the parking/charging plan so that before and after the departure time and before and after the arrival time, switching of the parking lots in which the electric vehicle and another electric vehicle are parked, respectively, is implemented.

4. The parking/charging management system according to claim 3, wherein
   the parking/charging plan calculation unit calculates the parking/charging plan so that before and after the departure time and before and after the arrival time, a waiting allowed period in which a driver remains in the electric vehicle parked in the parking lot is set and the switching of the parking lots is implemented in the waiting allowed period.

5. The parking/charging management system according to claim 3, wherein
   the parking/charging plan calculation unit calculates the parking/charging plan so that possibility or impossibility of the switching of the parking lots is set for each of the electric vehicles, and the switching of the parking lots is implemented or inhibited based on the possibility or impossibility of the switching of the parking lots.

6. The parking/charging management system according to claim 3, wherein
   the parking/charging plan calculation unit calculates the parking/charging plan so that the switching of the parking lots that optimizes an objective function for managing a number of times of the switching is implemented.

7. The parking/charging management system according to claim 3, wherein
   the parking/charging plan calculation unit calculates the parking/charging plan so that the switching of the parking lots that optimizes an objective function for managing a waiting time of the electric vehicle at implementation of the switching, the electric vehicle being in the parking lot to be switched, is implemented.

8. The parking/charging management system according to claim 1, further comprising an operation plan relaxation unit that when the operation plan setting up determination unit determines the operation plan to be not executable, based on possibility or impossibility of calculation of the parking/charging plan by the parking/charging plan calculation unit, sets a relaxation restriction condition and a relaxation objective function in the parking/charging plan, the relaxation restriction condition and the relaxation objective function being used for calculation of a corrected time for implementing correction of delaying the departure time or advancing the arrival time, wherein

the parking/charging plan calculation unit recalculates the parking/charging plan in which the relaxation restriction condition and the relaxation objective function are set, and wherein

when the parking/charging plan calculation unit can recalculate the parking/charging plan in which the relaxation restriction condition and the relaxation objective function are set, the operation plan setting up determination unit determines that the operation plan can be executed through the correction, and when the operation plan can be executed, the operation plan setting up determination unit outputs the parking/charging plan and the corrected time.

9. The parking/charging management system according to claim 8, wherein

a relaxation order indicating order of setting the relaxation restriction condition and the relaxation objective function in the parking/charging plan is set for each of the electric vehicles or each group of the electric vehicles, wherein

the operation plan relaxation unit additionally sets the relaxation restriction condition and the relaxation objective function for each of the electric vehicles or each group of the electric vehicles in the parking/charging plan in a setting order equivalent to the relaxation order, and wherein

the parking/charging plan calculation unit recalculates the parking/charging plan in which the relaxation restriction condition and the relaxation objective function for each of the electric vehicles or each group of the electric vehicles are set.

10. The parking/charging management system according to claim 8, wherein

the parking/charging plan calculation unit sets possibility or impossibility of the correction of each of the departure times and each of the arrival times for each of the electric vehicles or each group of the electric vehicles, and based on the possibility or impossibility of the correction, calculates the parking/charging plan so that the correction is implemented or inhibited at each of the departure times and each of the arrival times.

11. The parking/charging management system according to claim 8, wherein

before and after the arrival time and before and after the departure time, the parking/charging plan calculation unit sets a waiting allowed period in which a driver remains in the electric vehicle parked in the parking lot, wherein when the operation plan is determined to be not executable, based on possibility or impossibility of calculation of the parking/charging plan by the parking/charging plan calculation unit, the operation plan relaxation unit considers all the electric vehicles to be not a target for the relaxation restriction condition and the relaxation objective function and inhibits calculation of the correction and the corrected time, and calculates the parking/charging plan so that switching of the parking lots in which the electric vehicle and another electric vehicle are parked, respectively, is implemented during the waiting allowed period.

12. The parking/charging management system according to claim 1, further comprising an executability margin evaluation unit that performs correction of advancing the departure time or delaying the arrival time until the operation plan setting up determination unit determines the operation plan to be not executable, based on possibility or impossibility of calculation of the parking/charging plan by the parking/charging plan calculation unit, wherein

when calculation of the parking/charging plan by the parking/charging plan calculation unit is impossible at the departure time advanced by the executability margin evaluation unit or the arrival time delayed by the executability margin evaluation unit, the operation plan setting up determination unit determines that the operation plan has become not executable as a result of the correction, and when the operation plan is not executable, the operation plan setting up determination unit outputs a total of advancements of the departure time or a total of delays of the arrival time, as an executability margin.

13. A vehicle integrated management system comprising a fleet management system and a parking/charging management system that calculates a parking/charging plan including a charging schedule of an electric vehicle in a parking spot furnished with a charger, wherein

the fleet management system having a storage device and a processing device includes an operation planning unit that creates an operation plan including a departure time at which the electric vehicle departs from the parking spot and an arrival time at which the electric vehicle arrives at the parking spot, based on an operation schedule of the electric vehicle and on information on a non-use period in which the electric vehicle cannot be operated, wherein

the parking/charging management system having a storage device and a processing device includes:

a parking/charging plan calculation unit that calculates the parking/charging plan, using the operation plan created by the fleet management system, a restriction on the electric vehicle, a restriction on the charger, and a restriction on a layout of a parking lot in which the electric vehicle is parked at the parking spot, as restriction conditions;

an operation plan setting up determination unit that when the parking/charging plan calculation unit can calculate the parking/charging plan, determines the operation plan to be executable, and that when the operation plan is executable, outputs the parking/charging plan to the fleet management system; and

an operation plan relaxation unit that when the operation plan setting up determination unit determines the operation plan to be not executable, based on possibility or impossibility of calculation of the parking/charging plan by the parking/charging plan calculation unit, sets a relaxation restriction condition and a relaxation objective function in the parking/charging plan, the relaxation restriction condition and the relaxation objective function being used for calculating a corrected time for correcting the departure time or the arrival time, wherein

the parking/charging plan calculation unit recalculates the parking/charging plan in which the relaxation restriction condition and the relaxation objective function are set, and wherein

when the parking/charging plan calculation unit can calculate the parking/charging plan in which the relaxation restriction condition and the relaxation objective function are set, the operation plan setting up determination unit determines that the operation plan can be executed through the correction, and when the operation plan can be executed, the operation plan setting up determination unit outputs the parking/charging plan and the corrected time to the fleet management system.

14. A parking/charging management method executed by a parking/charging management system that calculates a parking/charging plan including a charging schedule of an electric vehicle at a parking spot furnished with a charger, the parking/charging management method causing the parking/charging management system having a storage device and a processing device to execute:

a parking/charging plan calculation step of calculating the parking/charging plan, using an operation plan including a departure time at which the electric vehicle departs from the parking spot and an arrival time at which the electric vehicle arrives at the parking spot, a restriction on the electric vehicle, and a restriction on the charger, as restriction conditions; and

an operation plan setting up determination step of determining the operation plan to be executable when the parking/charging plan can be calculated at the parking/charging plan calculation step, and when the operation plan is executable, outputting the parking/charging plan, wherein

at the parking/charging plan calculation step, the parking/charging plan is calculated, using a restriction on a layout of a parking lot in which the electric vehicle is parked at the parking spot, as a restriction condition.

15. The parking/charging management method according to claim 14, wherein

when the operation plan is determined to be not executable at the operation plan setting up determination step, the parking/charging management system further executes an operation plan relaxation step of setting a relaxation restriction condition and a relaxation objective function in the parking/charging plan, the relaxation restriction condition and the relaxation objective function being used for calculating a corrected time for correcting the departure time or the arrival time, wherein

at the parking/charging plan calculation step, the parking/charging plan in which the relaxation restriction condition and the relaxation objective function are set is recalculated, and wherein

at the operation plan setting up determination step,

when the parking/charging plan in which the relaxation restriction condition and the relaxation objective function are set can be recalculated at the parking/charging plan calculation step, it is determined that the operation plan can be executed through the correction, and when the operation plan can be executed, the parking/charging plan and the corrected time are outputted.

[FIG. 1]

# FIG. 1

EXPLANATORY DIAGRAM OF OUTLINE OF FIRST EMBODIMENT

EP 4 641 480 A1

# FIG. 2

[FIG. 2]

CONFIGURATION OF VEHICLE INTEGRATED MANAGEMENT SYSTEM ACCORDING TO FIRST EMBODIMENT

EP 4 641 480 A1

## FIG. 3

HARDWARE CONFIGURATION OF VEHICLE INTEGRATED
MANAGEMENT SYSTEM ACCORDING TO FIRST EMBODIMENT

1S

| FLEET MANAGEMENT SYSTEM (FMS) ~1 | INITIAL OPERATION PLAN 311 (DEPARTURE TIME / ARRIVAL TIME, OPERATION ROUTE) | PARKING/CHARGING MANAGEMENT SYSTEM ~5 |

COMMUNICATION DEVICE ~2

PARKING/CHARGING PLAN 711
CORRECTED OPERATION PLAN 712

COMMUNICATION DEVICE ~6

### FLEET MANAGEMENT SYSTEM (FMS) ~1

**COMMUNICATION DEVICE** ~2

**PROCESSOR** ~3
- OPERATION PLANNING UNIT ~31

**MEMORY** ~41

**INPUT/OUTPUT DEVICE** ~42
- OPERATION SCHEDULE SETTING UNIT ~42a
- VEHICLE NON-USE PERIOD SETTING UNIT ~42b

### PARKING/CHARGING MANAGEMENT SYSTEM ~5

**COMMUNICATION DEVICE** ~6

**PROCESSOR** ~7
- PARKING/CHARGING PLAN CALCULATION UNIT ~71
- OPERATION PLAN SETTING UP DETERMINATION UNIT ~72
- OPERATION PLAN RELAXATION UNIT ~73
- POWER CONSUMPTION ESTIMATION UNIT ~74

**MEMORY** ~81

**INPUT/OUTPUT DEVICE** ~82
- POWER-RECEIVING RESTRICTION SETTING UNIT ~82a
- PARKING/CHARGING RESTRICTION SETTING UNIT ~82b
- VEHICLE RESTRICTION SETTING UNIT ~82c
- WAITING RESTRICTION SETTING UNIT ~82d
- RELAXATION ORDER SETTING UNIT ~82e

[FIG. 3]

EP 4 641 480 A1

[FIG. 4]

# *FIG. 4*

PARKING/CHARGING PLAN CREATION PROCESS ACCORDING
TO FIRST EMBODIMENT

```
                    ┌─────────────┐
                    │    START    │
                    └─────────────┘
                           │
                           ▼
         ┌──────────────────────────────────────┐
         │      INPUT INITIAL OPERATION PLAN     │
         │     (DEPARTURE TIME / ARRIVAL TIME)   │~S11
         │  AND POWER CONSUMPTION ESTIMATED VALUE│
         └──────────────────────────────────────┘
                           │
                           ▼
         ┌──────────────────────────────────────┐
         │     CALCULATE PARKING/CHARGING PLAN,  │
         │       USING INITIAL OPERATION PLAN    │
         │      (DEPARTURE TIME / ARRIVAL TIME)  │~S12
         │  AND POWER CONSUMPTION ESTIMATED VALUE,│
         │         AS RESTRICTION CONDITIONS     │
         └──────────────────────────────────────┘
                           │
                           ▼         S13
                     ◇─────────────────────◇    YES
                    ╱    CALCULATING        ╲─────────────┐
                    ╲  PARKING/CHARGING PLAN ╱             │
                     ◇    IS POSSIBLE      ◇              │
                           │ NO     S15                    │
                           ▼                               ▼
         ╱──────────────────────────╲          ┌────────────────────┐
        ╱   LOOP: RELAXATION ORDER   ╲         │      OUTPUT        │~S14
        ╲   VEHICLE GROUP g = 1,2, …  ╱         │ PARKING/CHARGING   │
         ╲──────────────────────────╱          │      PLAN          │
                           │                    └────────────────────┘
                           ▼                               │
         ┌──────────────────────────────┐                 │
        ┌┤  SET RELAXATION CONDITION AND │                 │
        ││ RELAXATION OBJECTIVE FUNCTION,│~S16             │
        ││ AND CARRY OUT PARKING/CHARGING│                 │
        └┤    PLAN RECALCULATION PROCESS │                 │
         └──────────────────────────────┘                 │
                           │         S17                   │
                           ▼                               │
                     ◇─────────────────◇   YES             │
                    ╱   CALCULATING     ╲─────────┐        │
                    ╲ PARKING/CHARGING  ╱          │        │
                     ◇  IS POSSIBLE    ◇           ▼        │
                           │ NO   S19   ┌──────────────────┐│
                      ╱─────────╲       │ OUTPUT CORRECTED ││
                     ╱           ╲      │ OPERATION PLAN AND│~S18
                    ╱─────────────╲     │ PARKING/CHARGING ││
                           │             │      PLAN        ││
                           ▼             └──────────────────┘│
         ┌──────────────────────────┐            │          │
         │ OUTPUT "CORRECTION        │~S20        │          │
         │        IMPOSSIBLE"        │            │          │
         └──────────────────────────┘            │          │
                           │                      │          │
                           ▼                      ▼          │
                    ┌─────────────┐◄──────────────┘◄─────────┘
                    │     END     │
                    └─────────────┘
```

[FIG. 5]

# FIG. 5

## DATA CONFIGURATION OF INITIAL OPERATION PLAN

312            311

| VEHICLE | OPERATION ROUTE | POINT | EVENT | DATE | TIME | POSSIBILITY OR IMPOSSIBILITY OF CORRECTION | RELAXATION ORDER | CORRECTED TIME | CORRECTION AMOUNT | |
|---|---|---|---|---|---|---|---|---|---|---|
| EV1 | ROUTE 5 | POINT 0,1 | DEPARTURE | 10/1 | 7:00 | POSSIBLE | | NaN | NaN | — Tdp(1,1) |
| | | POINT 5,1 | ARRIVAL | 10/1 | 10:00 | IMPOSSIBLE | | NaN | NaN | — Tar(1,1) |
| | | | DEPARTURE | 10/1 | 10:30 | IMPOSSIBLE | 1 | NaN | NaN | — Tdp(1,2) |
| | | POINT 5,2 | ARRIVAL | 10/1 | 14:00 | IMPOSSIBLE | | NaN | NaN | — Tar(1,2) |
| | | | DEPARTURE | 10/1 | 15:00 | IMPOSSIBLE | | NaN | NaN | — Tdp(1,3) |
| | | POINT 0,1 | ARRIVAL | 10/1 | 20:00 | POSSIBLE | | NaN | NaN | — Tar(1,3) |
| EV2 | ROUTE 8 | POINT 0,1 | DEPARTURE | 10/1 | 8:00 | POSSIBLE | | NaN | NaN | — Tdp(2,1) |
| | | POINT 8,1 | ARRIVAL | 10/1 | 12:00 | IMPOSSIBLE | 2 | NaN | NaN | — Tar(2,1) |
| | | | DEPARTURE | 10/1 | 13:00 | IMPOSSIBLE | | NaN | NaN | |
| | | POINT 0,1 | ARRIVAL | 10/1 | 17:00 | POSSIBLE | | NaN | NaN | |
| ... | | | | | | | | | | |

EP 4 641 480 A1

[FIG. 6]

# *FIG. 6*

EXPLANATORY DIAGRAM CONCERNING SETTING OF
BASIC RESTRICTION CONDITION AND BASIC OBJECTIVE FUNCTION

## FIG. 7

DATA CONFIGURATION OF
PARKING/CHARGING PLAN                     711

| VEHICLE | DATE | TIME | POINT | PARKING LOT | CHARGING AMOUNT (kWh) |
|---------|------|------|-------|-------------|-----------------------|
| EV1 | 10/1 | 0:00 | POINT 0,1 | 2,1 | 3 |
|     | 10/1 | 0:30 | POINT 0,1 | 2,1 | 3 |
|     |      | ...  |       |     |   |
|     | 10/1 | 6:30 | POINT 0,1 | 2,1 | 3 |
|     | 10/1 | 7:00 | POINT 0,1 | 2,1 | 3 |
|     | 10/1 | 7:30 | NaN   | NaN | NaN |
|     | 10/1 | 8:00 | NaN   | NaN | NaN |
|     |      | ...  |       |     |   |
| EV2 | 10/1 | 0:00 | POINT 0,1 | 2,2 | 1 |
|     | 10/1 | 0:30 | POINT 0,1 | 2,2 | 1 |
|     |      | ...  |       |     |   |
|     | 10/1 | 6:30 | POINT 0,1 | 2,2 | 3 |
|     | 10/1 | 7:00 | POINT 0,1 | 1,1 | 0 |
|     | 10/1 | 7:30 | POINT 0,1 | 1,1 | 0 |
|     | 10/1 | 8:00 | NaN   | NaN | NaN |
|     |      | ...  |       |     |   |
| ...  |     |      |       |     |   |

DEPARTURE
(STAY AT POINT 0,1 AS LONG AS t < 7:30 HOLDS)

IMPLEMENT PARKING LOT SWITCHING AS
RESULT OF DEPARTURE OF EV1 LOCATED ON
FAR SIDE IN PARALLEL PARKING FORMATION

[FIG. 7]

EP 4 641 480 A1

[FIG. 8]

# FIG. 8

DATA CONFIGURATION OF CORRECTED OPERATION PLAN

712

| VEHICLE | OPERATION ROUTE | POINT | EVENT | DATE | TIME | POSSIBILITY OR IMPOSSIBILITY OF CORRECTION | RELAXATION ORDER | CORRECTED TIME | CORRECTION AMOUNT | |
|---|---|---|---|---|---|---|---|---|---|---|
| EV1 | ROUTE 5 | POINT 0,1 | DEPARTURE | 10/1 | 7:00 | POSSIBLE | 1 | 7:30 | 0:30 | IMPLEMENT CORRECTION |
| | | POINT 5,1 | ARRIVAL | 10/1 | 10:00 | IMPOSSIBLE | | 10:00 | 0:00 | |
| | | | DEPARTURE | 10/1 | 10:30 | IMPOSSIBLE | | 10:30 | 0:00 | |
| | | POINT 5,2 | ARRIVAL | 10/1 | 14:00 | IMPOSSIBLE | | 14:00 | 0:00 | |
| | | | DEPARTURE | 10/1 | 15:00 | IMPOSSIBLE | | 15:00 | 0:00 | |
| | | POINT 0,1 | ARRIVAL | 10/1 | 20:00 | POSSIBLE | | 19:00 | −1:00 | |
| EV2 | ROUTE 8 | POINT 0,1 | DEPARTURE | 10/1 | 8:00 | POSSIBLE | 2 | 8:00 | 0:00 | NOT IMPLEMENT CORRECTION |
| | | POINT 8,1 | ARRIVAL | 10/1 | 12:00 | IMPOSSIBLE | | 12:00 | 0:00 | |
| | | | DEPARTURE | 10/1 | 13:00 | IMPOSSIBLE | | 13:00 | 0:00 | |
| | | POINT 0,1 | ARRIVAL | 10/1 | 17:00 | POSSIBLE | | 17:00 | 0:00 | |
| ... | | | | | | | | | | |

EP 4 641 480 A1

[FIG. 9]

## FIG. 9

### RELAXATION CONDITION / RELAXATION OBJECTIVE FUNCTION SETTING PROCESS

( RELAXATION CONDITION / RELAXATION OBJECTIVE FUNCTION SETTING PROCESS )

**S16a**
INPUT INITIAL OPERATION PLAN (DEPARTURE TIME / ARRIVAL TIME) AND POWER CONSUMPTION ESTIMATED VALUE

**S16b**
TIME FRAME $t \in T$
*T DENOTES SET OF TIME FRAMES OF PARKING/CHARGING PLAN

**S16c**
ALL VEHICLES $e \in E$
*E DENOTES SET OF ALL VEHICLES

**S16d**
GENERATE PARKING SPOT STAYING BINARY CONSTANT $Q(e,t)$ BASED ON INITIAL OPERATION PLAN

**S16e**
GENERATE DEPARTURE TIME CORRECTION BINARY VARIABLE $q1(e,t)$ AND ARRIVAL TIME CORRECTION BINARY VARIABLE $q2(e,t)$

**S16f**
GENERATE PARKING SPOT STAYING BINARY VARIABLE $q(e,t)$ RELATED TO CORRECTED OPERATION PLAN

**S16g**
SET RELAXATION RESTRICTION CONDITION (FLAG OVERLAPPING INHIBITION) FOR $q(e,t) = Q(e,t)+q1(e,t)+q2(e,t)$

**S16h**
SET RELAXATION RESTRICTION CONDITION (DEPARTURE TIME CONTINUITY) FOR $q1(e,t)$ AND $q1(e,t+1)$

**S16i**
SET RELAXATION RESTRICTION CONDITION (ARRIVAL TIME CONTINUITY) FOR $q2(e,t-1)$ AND $q2(e,t)$

**S16j**
SET NON-RELAXATION RESTRICTION CONDITION (PART) FOR $q1(e,t)$ AND $q2(e,t)$

**S16k**
PARKING MANAGEMENT RESTRICTION CONDITION SETTING PROCESS (FOR EACH VEHICLE)

**S16l**
ALL VEHICLES

**S16m**
PARKING MANAGEMENT RESTRICTION CONDITION SETTING PROCESS (ALL VEHICLES)

**S16n**
NON-RELAXATION-TARGET VEHICLE $f \in F$
*F DENOTES SET OF NON-RELAXATION-TARGET VEHICLES

**S16o**
SET $q1(f,t)=0$ AND $q2(f,t)=0$, AND SET NON-RELAXATION RESTRICTION CONDITION (ALWAYS) THAT INHIBITS CORRECTION OF DEPARTURE TIME / ARRIVAL TIME

**S16p**
NON-RELAXATION-TARGET VEHICLE

**S16q**
TIME FRAME

**S16r**
ADD RELAXATION RESTRICTION CONDITION AND NON-RELAXATION RESTRICTION CONDITION TO BASIC RESTRICTION CONDITION

**S16s**
ADD PARKING MANAGEMENT RESTRICTION CONDITION TO BASIC RESTRICTION CONDITION

**S16t**
ADD RELAXATION OBJECTIVE FUNCTION TO BASIC RESTRICTION CONDITION

**S16u**
ADD PARKING MANAGEMENT OBJECTIVE FUNCTION TO BASIC RESTRICTION CONDITION

**S16v**
CALCULATE PARKING/CHARGING PLAN BY MIXED INTEGER LINEAR PROGRAMMING METHOD

**S16w**
CONVERT $q1(e,t)$ AND $q2(e,t)$ INTO DEPARTURE TIME AND ARRIVAL TIME OF CORRECTED OPERATION PLAN, RESPECTIVELY

( RETURN )

[FIG. 10]

# FIG. 10

EXPLANATORY DIAGRAM OF PARKING SPOT
WITH FIRST-IN-LAST-OUT RESTRICTION

[FIG. 11]

## FIG. 11

EXPLANATORY DIAGRAM OF CONVERSION OF DEPARTURE TIME
CORRECTION BINARY VARIABLE AND ARRIVAL TIME CORRECTION BINARY VARIABLE

EP 4 641 480 A1

[FIG. 12]

EP 4 641 480 A1

# FIG. 12

EXPLANATORY DIAGRAM OF CONVERSION OF DEPARTURE TIME
CORRECTION BINARY VARIABLE AND ARRIVAL TIME CORRECTION BINARY VARIABLE
IN CASE WHERE NON-RELAXATION RESTRICTION CONDITION (PART) IS SET

DISCRETIZED TIME AXIS

[FIG. 13]

# FIG. 13

DETAILS OF PARKING MANAGEMENT
RESTRICTION CONDITION SETTING PROCESS
(FOR EACH VEHICLE)

PARKING MANAGEMENT RESTRICTION
CONDITION SETTING PROCESS
(FOR EACH VEHICLE)

S16k1
GENERATE PARKING LOT SWITCHING
BINARY VARIABLE u(e,t) AND WAITING
ALLOWED PERIOD BINARY VARIABLE U(e,t)

S16k2
GENERATE PRE-DEPARTURE WAITING
BINARY VARIABLE u1(e,t) AND POST-ARRIVAL
WAITING BINARY VARIABLE u2(e,t)

S16k3
SET PARKING
MANAGEMENT RESTRICTION CONDITION
(WAITING FOR PARKING LOT SWITCHING)
FOR u(e,t), u1(e,t), AND u2(e,t)

S16k4
SWITCHING
PARKING LOT FOR VEHICLE e
IS ALLOWED — YES

NO — S16k5
SET u(e,t)=0 TO
INHIBIT PARKING LOT SWITCHING

S16k6
ROW OF PARKING LOTS c∈C
*C DENOTES SET OF ROWS
OF PARKING LOTS

S16k7
DEPTH OF PARKING LOTS d∈D
*D DENOTES SET OF DEPTHS OF ROWS
OF PARKING LOTS

S16k8
GENERATE PARKING LOT ASSIGNMENT
BINARY VARIABLE s(e,t,c,d)
REPRESENTING ASSIGNMENT OF
PARKING LOT c,d TO VEHICLE e

S16k9
SET PARKING
MANAGEMENT RESTRICTION CONDITION
(LIMITING PARKING LOT SWITCHING)
FOR s(e,t−1,c,d) AND s(e,t,c,d)

S16k10
DEPTH OF PARKING LOT

S16k11
ROW OF PARKING LOTS

S16k12
SET Σ_c Σ_d s(e,t,c,d) = q(e,t) AND
SET PARKING MANAGEMENT RESTRICTION
CONDITION (LOT ASSIGNMENT)
ACCORDING TO WHICH VEHICLE e
STAYING IN PARKING SPOT IS
ASSIGNED TO ANY ONE OF PARKING LOTS

S16k13
SET PARKING MANAGEMENT RESTRICTION
CONDITION (CHARGING AMOUNT)
BASED ON PARKING LOT ASSIGNMENT
BINARY VARIABLE s(e,t,c,d) AND ON
CHARGER POWER OUTPUT W(c,d)

RETURN

[FIG. 14]

# FIG. 14

EXPLANATORY DIAGRAM OF PARKING MANAGEMENT
RESTRICTION CONDITION (WAITING FOR PARKING LOT SWITCHING)

$Q(e,t)$ — 1, 0, $Tdp(e,n)$, $Tar(e,n)$

$U(e,t)$ — Twait, Twait

$q(e,t)$ — $T'dp(e,n)$, $T'ar(e,n)$

$u1(e,t)$ — PRE-DEPARTURE WAITING PERIOD

$u2(e,t)$ — POST-ARRIVAL WAITING PERIOD

$u(e,t)$ — SWITCH PARKING LOT TWICE BEFORE DEPARTURE · SWITCH PARKING LOT ONCE AFTER ARRIVAL

DISCRETIZED TIME AXIS

EP 4 641 480 A1

# FIG. 15

EXPLANATORY DIAGRAM OF PARKING MANAGEMENT RESTRICTION CONDITION
(WAITING FOR PARKING LOT SWITCHING)
(IN CASE WHERE ONLY PARKING LOT SWITCHING IS IMPLEMENTED AS CORRECTION OF OPERATION PLAN IS INHIBITED)

[FIG. 15]

EP 4 641 480 A1

[FIG. 16]

# FIG. 16

## DETAILS OF PARKING MANAGEMENT RESTRICTION CONDITION SETTING PROCESS (ALL VEHICLES)

```
┌─────────────────────────────────────┐
│  PARKING MANAGEMENT                  │
│  RESTRICTION CONDITION SETTING       │
│  PROCESS (ALL VEHICLES)              │
└─────────────────────────────────────┘
                 │          S16m1
                 ▼
┌─────────────────────────────────────┐
│  SET Σ_e u(e,t) ≤ Umax AND SET       │
│  PARKING MANAGEMENT RESTRICTION      │
│  CONDITION (NUMBER OF VEHICLES       │
│  THAT IMPLEMENT PARKING LOT          │
│  SWITCHING SIMULTANEOUSLY) THAT      │
│  LIMITS NUMBER OF VEHICLES THAT      │
│  IMPLEMENT PARKING LOT SWITCHING     │
│  SIMULTANEOUSLY                      │
└─────────────────────────────────────┘
                 │          S16m2
                 ▼
     ROW OF PARKING LOTS c ∈ C
                 │          S16m3
                 ▼
     DEPTH OF
     ROW OF PARKING LOTS d ∈ D
                 │          S16m4
                 ▼
┌─────────────────────────────────────┐
│  SET Σ_e s(e,t,c,d) ≤ 1 AND SET      │
│  PARKING MANAGEMENT RESTRICTION      │
│  CONDITION (NUMBER OF VEHICLES)      │
│  THAT LIMITS NUMBER OF VEHICLES      │
│  PARKING IN EACH PARKING LOT TO      │
│  1 OR 0                              │
└─────────────────────────────────────┘
                 │          S16m5
                 ▼
┌─────────────────────────────────────┐
│  SET Σ_e s(e,t,c,d-1) ≥ Σ_e s(e,t,c,d)│
│  AND SET PARKING MANAGEMENT          │
│  RESTRICTION CONDITION (ORDER)       │
│  ACCORDING TO WHICH PARKING LOTS     │
│  ARE USED IN ORDER WITH PARKING      │
│  LOT AT FARTHEST LOCATION FIRST      │
└─────────────────────────────────────┘
                 │          S16m6
                 ▼
     DEPTH OF ROW OF PARKING LOTS
                 │          S16m7
                 ▼
     ROW OF PARKING LOTS
                 │
                 ▼
            ( RETURN )
```

[FIG. 17]

EP 4 641 480 A1

# FIG. 17

EXPLANATORY DIAGRAM OF PARKING LOT SWITCHING

LOT 1,1    LOT 1,2    LOT 1,3

LOT FOR CHARGING

(2) VEHICLE #2 DEPARTS

VEHICLE #2    VEHICLE #1

(1) VEHICLE #1 MOVES TO LOT FOR WAITING

LOT FOR WAITING

(3) VEHICLE #1 DEPARTS

LOT 2,1

[FIG. 18]

EP 4 641 480 A1

# FIG. 18

CONFIGURATION OF VEHICLE INTEGRATED MANAGEMENT SYSTEM ACCORDING TO SECOND EMBODIMENT

[FIG. 19]

# FIG. 19

EXECUTABILITY MARGIN EVALUATION PROCESS

```
                    ┌──────────┐
                    │  START   │
                    └──────────┘
                         │
                         ▼
   ┌─────────────────────────────────────────┐
   │         INPUT INITIAL OPERATION PLAN      │
   │      (DEPARTURE TIME / ARRIVAL TIME)      │─── S11
   │   AND POWER CONSUMPTION ESTIMATED VALUE   │
   └─────────────────────────────────────────┘
                         │
                         ▼
   ┌─────────────────────────────────────────┐
   │       CALCULATE PARKING/CHARGING PLAN,    │
   │         USING INITIAL OPERATION PLAN      │
   │      (DEPARTURE TIME / ARRIVAL TIME)      │─── S12
   │     AND POWER CONSUMPTION ESTIMATED       │
   │    VALUE, AS RESTRICTION CONDITIONS       │
   └─────────────────────────────────────────┘
                         │
                         ▼        S13
                    ◇────────────◇        NO
                   ╱  CALCULATING  ╲──────────────────────┐
                  ╱  PARKING/CHARGING ╲                    │
                   ╲   PLAN IS POSSIBLE ╱                  │
                    ◇────────────◇                         │
                         │ YES       S24                   │
                         ▼                                 ▼
   ┌─────────────────────────────────┐   ┌─────────────────────────┐
   ╱     LOOP: EACH VEHICLE e ∈ E     ╲   │        OUTPUT           │── S31
   └─────────────────────────────────┘   │  EXECUTABILITY MARGIN=0 │
                         │◄──────────┐    └─────────────────────────┘
                         ▼           │                    │
   ┌─────────────────────────────┐   │                    │
   │  ADVANCE DEPARTURE TIME BY ΔT,│── S25                 │
   │   AND DELAY ARRIVAL TIME BY ΔT│   │                    │
   └─────────────────────────────┘   │                    │
                         │            │                    │
                         ▼            │                    │
   ┌─────────────────────────────┐   │                    │
   │ CALCULATE PARKING/CHARGING PLAN│── S26                │
   └─────────────────────────────┘   │                    │
                         │            │                    │
                         ▼    S27     │                    │
                    ◇────────────◇ YES│                    │
                   ╱  CALCULATING  ╲──┘                    │
                  ╱ PARKING/CHARGING ╲                     │
                   ╲  PLAN IS POSSIBLE ╱                   │
                    ◇────────────◇                         │
                         │ NO                              │
                         ▼                                 │
   ┌─────────────────────────────────┐                    │
   │       RECORD TOTAL AMOUNT OF      │                   │
   │ ADVANCEMENT OF DEPARTURE TIME AND │── S28             │
   │ TOTAL AMOUNT OF DELAY OF ARRIVAL  │                   │
   │   TIME, AS EXECUTABILITY MARGIN   │                   │
   └─────────────────────────────────┘                    │
                         │                                 │
                         ▼                                 │
   ╲─────────────────────────────────╱── S29              │
                         │                                 │
                         ▼                                 │
   ┌─────────────────────────────────┐                    │
   │    OUTPUT EXECUTABILITY MARGIN    │── S30             │
   └─────────────────────────────────┘                    │
                         │◄────────────────────────────────┘
                         ▼
                    ┌──────────┐
                    │   END    │
                    └──────────┘
```

[FIG. 20]

EP 4 641 480 A1

# FIG. 20

DISPLAYING EXECUTABILITY MARGIN

713D

TIME OF DEPARTURE

TIME OF ARRIVAL

EV1 — INITIAL OPERATION PLAN

EXECUTABILITY MARGIN: LARGE

EV2

EXECUTABILITY MARGIN: SMALL

EV3

EXECUTABILITY MARGIN: ZERO

# EP 4 641 480 A1

<table>
<tr><td colspan="2">INTERNATIONAL SEARCH REPORT</td><td>International application No.<br><br>**PCT/JP2023/039424**</td></tr>
</table>

**A.    CLASSIFICATION OF SUBJECT MATTER**

*G06Q 50/40*(2024.01)i; *G01C 21/34*(2006.01)i; *G08G 1/14*(2006.01)i
FI:    G06Q50/30; G01C21/34; G08G1/14 A

According to International Patent Classification (IPC) or to both national classification and IPC

**B.    FIELDS SEARCHED**

Minimum documentation searched (classification system followed by classification symbols)

G06Q10/00-99/00; G01C21/34; G08G1/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2022/145024 A1 (MITSUBISHI ELECTRIC CORPORATION) 07 July 2022 (2022-07-07)<br>       entire text, all drawings | 1-15 |
| A | JP 2015-176468 A (DENSO CORP.) 05 October 2015 (2015-10-05)<br>       entire text, all drawings | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/039424**

| Patent document cited in search report | | | Publication date (day/month/year) | Patent family member(s) | | | Publication date (day/month/year) |
|---|---|---|---|---|---|---|---|
| WO | 2022/145024 | A1 | 07 July 2022 | EP 4273783 A1 entire text, all drawings CN 116601659 A | | | |
| JP | 2015-176468 | A | 05 October 2015 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015060570 A

**Non-patent literature cited in the description**

• **MASATOSHI KUMAGAI et al.** Allocation/Charging Plan to Expand Motorized Coverage in Route Delivery in EV/Diesel Vehicle Mixed Operation. *The Institute of Electrical Engineers of Japan, Electric Power and Energy Division Convention*, 2022